# EUROPEAN PATENT APPLICATION

(11) **EP 4 067 400 A1**
(43) Date of publication of application: **05.10.2022**
(21) Application number: 20891568.6
(22) Date of filing: 27.11.2020
(51) Int. Cl.: C08F 299/06, B41J 2/01, C09D 11/30, C09D 11/38, B41M 5/00

(54) **ULTRAVIOLET-CURABLE WATER-BASED INKJET-PRINTING INK, ULTRAVIOLET-CURABLE WATER-BASED INKJET-PRINTING COMPOSITION, AND PRINTED MATTER**

(30) Priority: 29.11.2019 JP 2019216741; 29.11.2019 JP 2019216742; 28.02.2020 JP 2020033702; 28.02.2020 JP 2020033703
(71) Applicant: Mitsubishi Chemical Corporation, Chiyoda-ku Tokyo 100-8251 (JP)
(72) Inventor: INABA, Keisuke, Tokyo 100-8251 (JP); NAKAGAWA, Tomoko, Tokyo 100-8251 (JP); KARASAWA, Tamae, Tokyo 100-8251 (JP); ITO, Aiko, Tokyo 100-8251 (JP); YUGE, Tetsuharu, Tokyo 100-8251 (JP); TSUJIMOTO, Atsushi, Tokyo 100-8251 (JP); SAKATANI, Shuhei, Tokyo 100-8251 (JP)
(74) Representative: Hoffmann Eitle
(86) International application number: PCT/JP2020/044246
(87) International publication number: WO 2021/107104

(57) **Abstract**

Provided is an ink for inkjet printing having high environmental safety, well satisfying characteristics required for a printing ink for a commercial inkjet printer such as high image quality performance, high coating performance, high-speed printability, and substrate versatility in a well-balanced manner, and having good pigment dispersion stability. The ultraviolet-curable water-based inkjet-printing ink contains at least an ultraviolet curable oligomer and a colorant. The ultraviolet-curable oligomer includes a structural unit derived from a polyisocyanate compound (A), a structural unit derived from a compound (B') shown below, and a structural unit derived from a compound (C') shown below. Compound (B'): a compound having two or more polymerizable unsaturated bonds and capable of bonding with the polyisocyanate compound (A) Compound (C'): a water-soluble compound capable of bonding with the polyisocyanate compound (A)

## Description

### Technical Field

The present invention relates to an ultraviolet-curable water-based inkjet-printing ink.

The present invention also relates to a printed material produced using the ultraviolet-curable water-based inkjet-printing ink.

The present invention also relates to a dispersion suitable for the ultraviolet-curable water-based inkjet-printing ink.

### Background Art

Inkjet printers are characterized, for example, in that full colorization is easily achieved, that noise is low, that high-resolution images are obtained at low cost, that high-speed printing is available, and that they can print not only on flat surfaces but also on curves surfaces etc. and can also print on large-area objects. Therefore, the applications of inkjet printers are not limited to personal use applications, and in recent years, commercial use inkjet printers are rapidly becoming widespread and used for signage applications, window films, posters, car wrappings, wallpaper, etc.

Commercial use inkjet printers are occasionally used for large-area printed materials and printed materials for outdoor use, and importance is attached to the long-term stability of the printed films and printed film productivity. Therefore, printing inks used for the commercial use inkjet printers are required to have the following characteristics.
(1) High image quality performance: Images (including printed characters; the same applies to the following) are free from blurring. The thickness of the printed films formed (hereinafter referred to as the "ink thickness") is small, and the printed films have good surface smoothness.
(2) High coating performance: The printed films formed have high coating strength, good waterfastness, good solvent resistance such as alcohol resistance, good lightfastness, and good weatherproofness.
(3) High-speed printability: Ink dischargeability is good, and the inks are quick drying (have high tackiness).
(4) Substrate versatility: The inks can be printed on polyethylene terephthalate (PET), polyvinyl chloride (PVC), polypropylene (PP), paper, textiles (cloths and woven fabrics), and other various recording mediums (substrates).
(5) Environmental safety: The inks have less odor, and the content of VOCs (organic solvents and unreacted monomers) is small.

The following inks have been provided as printing inks for commercial use inkjet printers. In the following description, an "UV ink" means an ultraviolet curable ink.

Water-based inks each prepared by dispersing a pigment in a water-based medium.

Solvent UV inks each prepared by dispersing or dissolving a pigment and an ultraviolet curable monomer in an organic solvent.

Solventless UV inks each prepared by dispersing a pigment in an ultraviolet curable monomer without using a solvent.

Water-based latex inks each prepared by dispersing a pigment and a resin in a water-based medium.

Ultraviolet curable water-based inks each prepared by dispersing a pigment and a UV curable oligomer in a water-based medium (for example, PTL 1 to PTL 3).

Since the water-based inks are water-based, their environmental safety is good, and the ink thickness is small. Moreover, the surface smoothness of the printed films is good. However, the water-based inks are inferior in coating performance, high-speed printability, and substrate versatility and cause an image blurring problem.

The coating performance, substrate versatility, and ink thickness of the solvent UV inks are good, and the surface smoothness of the printed films is also good. However, the solvent UV inks cause an image blurring problem, and their high-speed printability is insufficient. Moreover, since these inks are solvent-based, their environmental safety is poor.

With the solventless UV inks, images of high quality with no blurring can be obtained, and good coating performance, high-speed printability, and good substrate versatility are obtained. However, the environmental safety of the solventless UV inks is poor, and their viscosity is high. Therefore, the ink thickness is large, and the surface smoothness of the printed films is low.

Since the water-based latex inks are water-based, their environmental safety is good, and their substrate versatility is also good. Moreover, other characteristics are relatively good. However, the coating performance and the high-speed printability of the water-based latex inks are unsatisfactory, and image quality is unsatisfactory because of nonuniform blurring.

Unlike the above inks, the ultraviolet curable water-based inks satisfy all the required characteristics in a relatively well-balanced manner, but there is a desire to further improve these characteristics.

Printing inks for commercial use inkjet printers are required to have, in addition to the above performance characteristics (1) to (5), high pigment dispersion stability so that the inks do not deteriorate due to aggregation of the pigment or an increase in viscosity during storage.

As for the storage stability, it is required that not only the storage stability at room temperature but also the storage stability at high temperature be good because of the following reason.

Printing inks for inkjet printers are often stored for a long time under high temperature conditions during storage or transportation. Therefore, the inks are required to have storage stability at high temperature so that changes in properties such as an increase in viscosity and precipitation of the pigment do not occur even when the inks are stored in a high temperature atmosphere at 40 to 60°C for about to 2 days to about 14 days.
PTL 1: JP2015-48435A
PTL 2: JP2014-189715A
PTL 3: JP2011-201973A

### Summary of Invention

An object of an invention according to a first embodiment of the present invention (hereinafter referred to as a "first invention") is to provide, as a printing ink for an inkjet printer, an ultraviolet-curable water-based inkjet-printing ink that has better characteristics than conventional ultraviolet curable water-based inks and also has good pigment dispersion stability, to provide an ultraviolet curable water-based composition for inkjet printing that is used for the ultraviolet curable water-based ink, and to provide a printed material printed using the ultraviolet-curable water-based inkjet-printing ink. However, it is not always necessary that the first invention satisfy all the performance requirements (1) to (5) above.

The present inventors have found that the use of an ultraviolet curable oligomer having a specific structure can provide an ink that has high environmental safety, well satisfies the characteristics required for a printing ink for an inkjet printer such as high-image quality performance, high coating performance, high-speed printability, and substrate versatility in a well-balanced manner, and also has high pigment dispersion stability.

The first invention is summarized in [1] to [18] below.
[1] An ultraviolet curable water-based ink for inkjet printing, comprising at least: an ultraviolet curable oligomer; and a coloring agent,
   wherein the ultraviolet curable oligomer includes a structural unit derived from a polyisocyanate compound (A), a structural unit derived from a compound (B') shown below, and a structural unit derived from a compound (C') shown below:
   the compound (B'): a compound having two or more polymerizable unsaturated bonds and bondable to the polyisocyanate compound (A); and
   the compound (C'): a water-soluble compound bondable to the polyisocyanate compound (A).
[2] The ultraviolet curable water-based ink for inkjet printing according to [1], wherein the compound (C') is a compound having one terminal hydroxy group.
[3] The ultraviolet curable water-based ink for inkjet printing according to [1] or [2], wherein the compound (B') is a hydroxy group-containing polyfunctional (meth)acrylate (B), and wherein the compound (C') is a polyalkylene glycol (C) .
[4] The ultraviolet curable water-based ink for inkjet printing according to [3], wherein, in the ultraviolet curable oligomer, the structural unit derived from the polyisocyanate compound (A) is bonded to the structural unit derived from the hydroxy group-containing polyfunctional (meth)acrylate (B) through a urethane bond and to the structural unit derived from the polyalkylene glycol (C) through a urethane bond.
[5] The ultraviolet curable water-based ink for inkjet printing according to any one of [1] to [4], wherein the polyisocyanate compound (A) has three or more isocyanate groups.
[6] The ultraviolet curable water-based ink for inkjet printing according to any one of [3] to [5], wherein the polyalkylene glycol (C) is a polyethylene glycol monosubstituted ether.
[7] The ultraviolet curable water-based ink for inkjet printing according to any one of [1] to [6], wherein the ultraviolet curable oligomer is dispersed as particles in a water-based medium.
[8] The ultraviolet curable water-based ink for inkjet printing according to any one of [1] to [7], wherein the ultraviolet curable oligomer has an average particle diameter of from 10 nm to 200 nm inclusive.
[9] The ultraviolet curable water-based ink for inkjet printing according to any one of [1] to [8], wherein the ultraviolet curable water-based ink has a viscosity at 25°C of from 1 mPa·sec to 25 mPa·sec inclusive.
[10] The ultraviolet curable water-based ink for inkjet printing according to any one of [1] to [9], wherein the content of the coloring agent is from 0.1% by mass to 8% by mass inclusive, and wherein the content of the ultraviolet curable oligomer is from 3% by mass to 20% by mass inclusive.
[11] The ultraviolet curable water-based ink for inkjet printing according to any one of [1] to [10], further comprising one or two or more of a polymerization initiator, a sensitizer, and a surfactant.
[12] The ultraviolet curable water-based ink for inkjet printing according to [11], comprising a polymerization initiator and/or a sensitizer, wherein at least part of the polymerization initiator and/or the sensitizer is contained in the ultraviolet curable oligomer.
[13] A printed material comprising: a recording medium; and a cured product formed from the ultraviolet curable water-based ink for inkjet printing according to any one of claims 1 to 12.
[14] An ultraviolet curable water-based composition for inkjet printing, comprising: an ultraviolet curable oligomer; and at least one of a polymerization initiator, a sensitizer, and a surfactant,
   wherein the ultraviolet curable oligomer includes a structural unit derived from a polyisocyanate compound (A), a structural unit derived from a compound (B') shown below, and a structural unit derived from a compound (C') shown below:
   the compound (B'): a compound having two or more polymerizable unsaturated bonds and bondable to the polyisocyanate compound (A); and
   the compound (C'): a water-soluble compound bondable to the polyisocyanate compound (A).
[15] The ultraviolet curable water-based composition for inkjet printing according to [14], wherein the compound (C') is a compound having one terminal hydroxy group.
[16] The ultraviolet curable water-based composition for inkjet printing according to [14] or [15], wherein the compound (B') is a hydroxy group-containing polyfunctional (meth)acrylate (B), and wherein the compound (C') is a polyalkylene glycol (C).
[17] The ultraviolet curable water-based composition for inkjet printing according to any one of [14] to [16], comprising at least one polymerization initiator and comprising a sensitizer and/or a surfactant.
[18] The ultraviolet curable water-based composition for inkjet printing according to any one of [14] to [17], comprising a polymerization initiator and/or a sensitizer, wherein at least part of the polymerization initiator and/or the sensitizer is contained in the ultraviolet curable oligomer.

An object of an invention according to a second embodiment of the present invention (hereinafter referred to as a "second invention") is to provide, as a printing ink for an inkjet printer, an ultraviolet curable water-based ink for inkjet printing that has better characteristics than conventional ultraviolet curable water-based inks and also has good high-temperature storage stability, to provide a dispersant and an ultraviolet curable water-based composition for inkjet printing that is used for the ultraviolet curable water-based ink, and to provide a printed material printed using the ultraviolet curable water-based ink for inkjet printing. However, it is not always necessary that the second invention satisfy all the performance requirements (1) to (5) above.

The present inventors have found that the use of an ultraviolet curable oligomer and blending a compound, as an additive, having a specific structure can provide an ultraviolet curable water-based ink for a printing ink for an inkjet printer having good high-temperature storage stability that prevents increase in viscosity and precipitation of a pigment during storage at high temperature.

The second invention is summarized in [19] to [44] below.

[19] An ultraviolet curable water-based ink for inkjet printing, comprising at least: an ultraviolet curable oligomer; a coloring agent; and a compound represented by the following general formula (I): 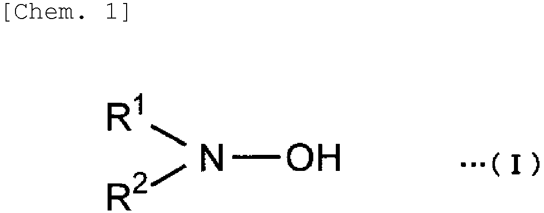 (wherein, in formula (I), R¹ and R² each independently represent an alkyl group having 1 to 10 carbon atoms).

[20] The ultraviolet curable water-based ink for inkjet printing according to [19], wherein the ultraviolet curable oligomer is nonionic.

[21] The ultraviolet curable water-based ink for inkjet printing according to [19] or [20], wherein the compound represented by general formula (I) is N,N-diethylhydroxylamine.

[22] The ultraviolet curable water-based ink for inkjet printing according to any one of [19] to [21], wherein the ultraviolet curable oligomer includes a structural unit derived from a polyisocyanate compound (A), a structural unit derived from a compound (B') shown below, and a structural unit derived from a compound (C') shown below:
the compound (B'): a compound having two or more polymerizable unsaturated bonds and bondable to the polyisocyanate compound (A); and
the compound (C'): a water-soluble compound bondable to the polyisocyanate compound (A).

[23] The ultraviolet curable water-based ink for inkjet printing according to [22], wherein the compound (C') is a compound having one terminal hydroxy group.

[24] The ultraviolet curable water-based ink for inkjet printing according to [22] or [23], wherein the compound (B') is a hydroxy group-containing polyfunctional (meth)acrylate (B), and wherein the compound (C') is a polyalkylene glycol (C).

[25] The ultraviolet curable water-based ink for inkjet printing according to [24], wherein, in the ultraviolet curable oligomer, the structural unit derived from the polyisocyanate compound (A) is bonded to the structural unit derived from the hydroxy group-containing polyfunctional (meth)acrylate (B) through a urethane bond and to the structural unit derived from the polyalkylene glycol (C) through a urethane bond.

[26] The ultraviolet curable water-based ink for inkjet printing according to any one of [22] to [25], wherein the polyisocyanate compound (A) has three or more isocyanate groups.

[27] The ultraviolet curable water-based ink for inkjet printing according to any one of [24] to [26], wherein the polyalkylene glycol (C) is a polyethylene glycol monosubstituted ether.

[28] The ultraviolet curable water-based ink for inkjet printing according to any one of [19] to [27], wherein the ultraviolet curable oligomer has an average particle diameter of from 10 nm to 200 nm inclusive.

[29] The ultraviolet curable water-based ink for inkjet printing according to any one of [19] to [28], wherein the ultraviolet curable water-based ink has a viscosity at 25°C of from 1 mPa·sec to 25 mPa·sec inclusive.

[30] The ultraviolet curable water-based ink for inkjet printing according to any one of [19] to [29], wherein the content of the coloring agent is from 0.1% by mass to 8% by mass inclusive, wherein the content of the ultraviolet curable oligomer is from 3% by mass to 20% by mass inclusive, and wherein the content of the compound represented by general formula (I) is from 0.01% by mass to 5% by mass inclusive.

[31] The ultraviolet curable water-based ink for inkjet printing according to any one of [19] to [30], further comprising one or two or more of a polymerization initiator, a sensitizer, and a surfactant.

[32] The ultraviolet curable water-based ink for inkjet printing according to [31], comprising a polymerization initiator and/or a sensitizer, wherein at least part of the polymerization initiator and/or the sensitizer is contained in the ultraviolet curable oligomer.

[33] A dispersion comprising an ultraviolet curable oligomer, wherein the ultraviolet curable oligomer is nonionic, and wherein the dispersion further comprises a compound represented by the following general formula (I) in an amount of from 0.01% by mass to 5% by mass inclusive: 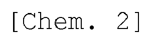 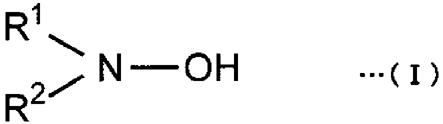 (wherein, in formula (I), R¹ and R² each independently represent an alkyl group having 1 to 10 carbon atoms).

[34] The dispersion according to [33], wherein the ultraviolet curable oligomer includes a structural unit derived from a polyisocyanate compound (A), a structural unit derived from a compound (B') shown below, and a structural unit derived from a compound (C') shown below:
the compound (B'): a compound having two or more polymerizable unsaturated bonds and bondable to the polyisocyanate compound (A); and
the compound (C'): a water-soluble compound bondable to the polyisocyanate compound (A).

[35] The dispersion according to [34], wherein the compound (C') is a compound having one terminal hydroxy group.

[36] A printed material comprising: a recording medium; and a cured product formed on the recording medium using the ultraviolet curable water-based ink for inkjet printing according to any one of [19] to [32].

[37] An ultraviolet curable water-based composition for inkjet printing, comprising: an ultraviolet curable oligomer; at least one of a polymerization initiator, a sensitizer, and a surfactant; and a compound represented by the following general formula (I): 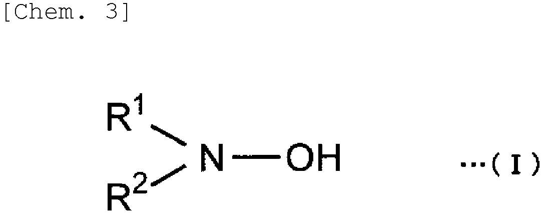 (wherein, in formula (I), R¹ and R² each independently represent an alkyl group having 1 to 10 carbon atoms).

[38] The ultraviolet curable water-based composition for inkjet printing according to [37], wherein the ultraviolet curable oligomer is nonionic.

[39] The ultraviolet curable water-based composition for inkjet printing according to [37] or [38], wherein the compound represented by general formula (I) is N,N-diethylhydroxylamine.

[40] The ultraviolet curable water-based composition for inkjet printing according to any one of [37] to [39], wherein the ultraviolet curable oligomer includes a structural unit derived from a polyisocyanate compound (A), a structural unit derived from a compound (B') shown below, and a structural unit derived from a compound (C') shown below:
the compound (B'): a compound having two or more polymerizable unsaturated bonds and bondable to the polyisocyanate compound (A); and
the compound (C'): a water-soluble compound bondable to the polyisocyanate compound (A).

[41] The ultraviolet curable water-based composition for inkjet printing according to [40], wherein the compound (C') is a compound having one terminal hydroxy group.

[42] The ultraviolet curable water-based composition for inkjet printing according to [40] or [41], wherein the compound (B') is a hydroxy group-containing polyfunctional (meth)acrylate (B), and wherein the compound (C') is a polyalkylene glycol (C).

[43] The ultraviolet curable water-based composition for inkjet printing according to any one of [37] to [42], comprising at least one polymerization initiator and comprising a sensitizer and/or a surfactant.

[44] The ultraviolet curable water-based composition for inkjet printing according to any one of [37] to [43], comprising a polymerization initiator and/or a sensitizer, wherein at least part of the polymerization initiator and/or the sensitizer is contained in the ultraviolet curable oligomer.

### Advantageous Effects of Invention

The ultraviolet-curable water-based inkjet-printing ink of the first invention has high environmental safety, well satisfies the characteristics required for a printing ink for an inkjet printer such as high image quality performance, high coating performance, high-speed printability, and substrate versatility in a well-balanced manner, and has good pigment dispersion stability. With the water-based composition of the first invention, an ultraviolet-curable water-based inkjet-printing ink that well satisfies the required characteristics and has good pigment dispersion stability can be provided.

The ultraviolet-curable water-based inkjet-printing ink of the second invention has high environmental safety and well satisfies the characteristics required for a printing ink for an inkjet printer such as image quality performance, high coating performance, high-speed printability, and substrate versatility in a well-balanced manner, and has good pigment dispersion stability at high temperature. With the dispersion and the water-based composition of the second invention, an ultraviolet-curable water-based inkjet-printing ink having high coating strength and good high-temperature storage stability can be provided.

With the ultraviolet-curable water-based inkjet-printing ink and the water-based composition of the first invention and the ultraviolet-curable water-based inkjet-printing ink, the dispersion, and the water-based composition of the second invention, while environmental safety is maintained, printed images with high image quality and high coating performance can be efficiently formed on a wide variety of recording mediums at high speed with high productivity.

### Description of Embodiments

Embodiments of the present invention will be described in detail.

The following description of components are examples (representative examples) of the embodiments of the present invention, and the invention is not specifically limited to these embodiments within the scope of the invention.

In the present invention, the expression "X to Y" (X and Y are any numbers) is intended to encompass not only "from X to Y inclusive" but also "preferably larger than X" and "preferably less than Y."

In the following description, the "first invention" and the "second invention" are collectively referred to as the "present invention."

In the present invention, the term "(meth)acrylate" means acrylate or methacrylate.

The ultraviolet-curable water-based inkjet-printing ink of the present invention (which may be hereinafter referred to as the "ink of the invention") is synonymous with an "ultraviolet curable water-based inkjet printing ink."

The ink of the invention is ultraviolet curable, but the active energy rays used for curing are not limited to ultraviolet rays.

The curing of the ink of the invention is not limited to curing using active energy rays, and the ink of the invention may be cured using, for example, heat.

In the present invention, a "structural unit derived from X" means a structural unit obtained from a compound X as a raw material and introduced into the molecular structure of an ultraviolet curable oligomer through the reaction of the compound X with another compound.

The "structural unit derived from X" is not always limited to a structural unit obtained from the compound X as a raw material, and a structural unit formed from a compound other than X is equivalent to the "structural unit derived from X" when they have the same chemical structure.

### 1: Ultraviolet-curable water-based inkjet-printing ink

The ink of the first invention is an ultraviolet-curable water-based inkjet-printing ink containing at least an ultraviolet curable oligomer and a colorant and is characterized in that the ultraviolet curable oligomer includes a structural unit derived from a polyisocyanate compound (A), a structural unit derived from a compound (B') shown below, and a structural unit derived from a compound (C') shown below (this ultraviolet curable oligomer may be referred to as the "ultraviolet curable oligomer in the first invention").

Compound (B'): A compound having two or more polymerizable unsaturated bonds and capable of bonding with the polyisocyanate compound (A).

Compound (C'): A water-soluble compound capable of bonding with the polyisocyanate compound (A).

The ink of the second invention is an ultraviolet-curable water-based inkjet-printing ink containing at least an ultraviolet curable oligomer and a colorant and is characterized in that the ultraviolet curable oligomer is preferably nonionic and that the ultraviolet curable water-based ink further contains a compound represented by the following general formula (I) (which hereinafter may be referred to as a "compound (I)").

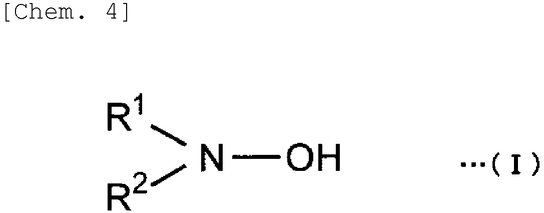

(In formula (I), R¹ and R² each independently represent an alkyl group having 1 to 10 carbon atoms.)

### 1-1: Ultraviolet curable oligomer

The ultraviolet curable oligomer in the first invention includes the structural unit derived from the polyisocyanate compound (A), the structural unit derived from the compound (B') shown below, and the structural unit derived from the compound (C') shown below and is generally produced by reacting the polyisocyanate compound (A), the compound (B'), and the compound (C').

Compound (B'): A compound having two or more polymerizable unsaturated bonds and capable of bonding with the polyisocyanate compound (A).

Compound (C'): A water-soluble compound capable of bonding with the polyisocyanate compound (A).

In the ultraviolet curable oligomer in the first invention, structural moieties derived from the polyisocyanate compound (A) contribute to the adhesion of a printed film to a recording medium.

Structural moieties derived from the compound (B') contribute to ultraviolet curability. When the compound (B') is a hydroxy group-containing polyfunctional (meth)acrylate (B), the (meth)acryloyl group contained in the structural unit derived from the hydroxy group-containing polyfunctional (meth)acrylate (B) contributes to ultraviolet curability.

Structural moieties derived from the compound (C') contribute to water dispersibility of the oligomer in the ink. When the compound (C') is a polyalkylene glycol (C), the polyalkylene glycol chain in the structural unit derived from the polyalkylene glycol (C) contributes to the water dispersibility of the oligomer in the ink.

One feature of the first invention is that the oligomer used has all the above structural units in one molecule.

From the viewpoint of reactivity, the compound (B') is preferably the hydroxy group-containing polyfunctional (meth)acrylate (B). From the viewpoint of dispersibility in water, the compound (C') is preferably the polyalkylene glycol (C). Hereinafter, the ultraviolet curable oligomer in the first invention used in this case may be referred to as an "ultraviolet curable (meth)acrylate oligomer."

Moreover, it is preferable that the structural unit derived from the polyisocyanate compound (A) is bonded to the structural unit derived from the hydroxy group-containing polyfunctional (meth)acrylate (B) through a urethane bond and to the structural unit derived from the polyalkylene glycol (C) through a urethane bond because good solvent resistance such as alcohol resistance can be obtained.

The above ultraviolet curable oligomer in the first invention exhibits good ultraviolet curability, good coating performance, good substrate fixability, and good water dispersion stability.

Specific materials are selected as the polyisocyanate compound (A), the hydroxy group-containing polyfunctional (meth)acrylate (B), and the polyalkylene glycol (C) that are included in the ultraviolet curable oligomer in the first invention such that the oligomer is nonionic. In this manner, aggregation of the pigment is prevented, and better pigment dispersion stability can be obtained.

No particular limitation is imposed on the ionicity of the ultraviolet curable oligomer used in the second invention, and the ultraviolet curable oligomer may be nonionic or ionic (anionic, cationic, or amphoteric). When the ultraviolet curable oligomer is nonionic, aggregation of the pigment is prevented, and the storage stability of the ink can be improved. The term nonionic means that a hydrophilic group in the ultraviolet curable oligomer has a structure that does not undergo ionic dissociation in water, and specific examples include an ether bond and a hydroxy group.

No particular limitation is imposed on the ultraviolet curable oligomer used in the second invention, but an ultraviolet curable oligomer having a structural unit derived from a (meth)acrylate, particularly a structural unit derived from a polyfunctional (meth)acrylate, is preferred. More preferably, the ultraviolet curable oligomer has a structural unit derived from a polyfunctional (meth)acrylate and a structural unit derived from a polyalkylene glycol. The ultraviolet curable oligomer used in the second invention is preferably an ultraviolet curable oligomer including the structural unit derived from the polyisocyanate compound (A), the structural unit derived from the compound (B'), and the structural unit derived from the compound (C') and more preferably an ultraviolet curable (meth)acrylate oligomer including the structural unit derived from the polyisocyanate compound (A), the structural unit derived from the hydroxy group-containing polyfunctional (meth)acrylate (B), and the structural unit derived from the polyalkylene glycol (C) because good ultraviolet curability, good fixability, good water dispersion stability, a high pigment aggregation prevention effect, high alcohol resistance, etc. are obtained. Specifically, the ultraviolet curable oligomer used in the second invention is preferably the ultraviolet curable oligomer in the first invention and more preferably the ultraviolet curable (meth)acrylate oligomer described above.

As described above, one preferred form of the compound (B') is the hydroxy group-containing polyfunctional (meth)acrylate (B), and another preferred form of the compound (B') is a "compound(B") having a hydroxy group and two or more polymerizable unsaturated bonds."

A "compound capable of bonding with the polyisocyanate compound (A)" in the compound (B') can replace a hydroxy group with a carboxyl group, an amino group, etc. Examples of the polymerizable unsaturated bond include a carbon-carbon double bond and a carbon-carbon triple bond. Of these, a carbon-carbon double bond is preferred. More specific examples include a vinyl group and a carbo-carbon double bond derived from a (meth)acryloyl group etc.

Examples of the water-soluble compound in the compound (C') include water-soluble polymers, and specific examples include polyglycerin, polyhydroxy(meth)acrylate, polyamines, quaternary aminated polystyrene, sulfonated polystyrene, polyethers, and polyalkylene glycols. In particular, nonionic water-soluble compounds such as polyglycerin, polyhydroxy(meth)acrylate, polyalkylene glycols are preferred, and polyalkylene glycols are particularly preferable. Each of these water-soluble compounds may be a copolymer. The compound (C') has the structure of the water-soluble compound and the structure of a "compound capable of bonding with the polyisocyanate compound (A)." The "compound capable of bonding with the polyisocyanate compound (A)" may be selected from the structures exemplified for the compound (B').

The structural unit derived from the polyisocyanate compound (A) forms urethane bonds when reacted with the structural unit derived from the hydroxy group-containing polyfunctional (meth)acrylate (B) and the structural unit derived from the polyalkylene glycol (C), and each urethane bond may be replaced with a urea bond or an amide bond. When a urea bond is formed, a hydroxy group in the hydroxy group-containing polyfunctional (meth)acrylate (B) used as the compound (B') is replaced with an amino group, or a terminal hydroxy group in the polyalkylene glycol (C) used as the compound (C') is replaced with an amino group. When an amide bond is formed, a hydroxy group in the hydroxy group-containing polyfunctional (meth)acrylate (B) used as the compound (B') is replaced with a carboxyl group, or a terminal hydroxy group in the polyalkylene glycol (C) used as the compound (C') is replaced with a carboxyl group. By using a compound that itself can form a urea bond or an amide bond instead of converting a hydroxy group as described above, substantially the same chemical structure as above may be formed.

As described above, the structural unit derived from the polyisocyanate compound (A) contributes to the adhesion of a printed film to a recording medium. This may be because isocyanate groups in the polyisocyanate compound (A) form polar moieties such as urethane bonds, urea bonds, or amide bonds in the ultraviolet curable oligomer.

In the present invention, when the hydroxy group-containing polyfunctional (meth)acrylate (B) is applied to the compound (B') or the compound (B") as described above or when the polyalkylene glycol (C) is applied to the compound (C') as described above, preferred modes or specific modes when the hydroxy group-containing polyfunctional (meth)acrylate (B) or the polyalkylene glycol (C) is used as described later can be applied to preferred or specific modes of the compound (B') or (B") or preferred or specific modes of the compound (C').

Compounds forming the ultraviolet curable oligomer in the first invention or the ultraviolet curable oligomer used in the second invention will be described. In the present invention, the term "oligomer" is not limited to those having a specific molecular weight or having an average molecular weight in a specific range so long as it has any of the structures described below.

The ink of the first invention may contain only one ultraviolet curable oligomer in the first invention or may contain two or more ultraviolet curable oligomers.

The ink of the second invention may contain only one ultraviolet curable oligomer or may contain two or more ultraviolet curable oligomers.

The ultraviolet curable ligomer in the first invention is included in the ultraviolet curable oligomer used in the second invention.

### 1-1-1: Polyisocyanate compound (A)

The polyisocyanate compound (A) is a compound having a total of two or more isocyanate groups per molecule.

No particular limitation is imposed on the type of polyisocyanate compound (A), and examples of the polyisocyanate compound (A) include chain aliphatic polyisocyanates, aromatic polyisocyanates, and alicyclic polyisocyanates. In particular, it is preferable from the viewpoint of weatherproofness and hardness that the polyisocyanate compound (A) contains a polyisocyanate trimer compound.

The chain aliphatic polyisocyanate is a compound having a chain aliphatic structure and having two or more isocyanate groups. The chain aliphatic polyisocyanate is preferred from the viewpoint of weatherproofness and stretchability. No particular limitation is imposed on the chain aliphatic structure in the chain aliphatic polyisocyanate, but the chain aliphatic structure is preferably a linear or branched alkylene group having 1 to 12 carbon atoms and preferably having 1 to 6 carbon atoms. Examples of the chain aliphatic polyisocyanate include: aliphatic diisocyanates such as tetramethylene diisocyanate, hexamethylene diisocyanate, trimethylhexamethylene diisocyanate, and dimer acid diisocyanate; and trimer compounds of these polyisocyanates.

The aromatic polyisocyanate is a compound having an aromatic structure and having two or more isocyanate groups. The aromatic polyisocyanate is preferred from the viewpoint of coating strength. No particular limitation is imposed on the aromatic structure in the aromatic polyisocyanate, but the aromatic structure is preferably an aromatic structure having 6 to 13 carbon atoms. Examples of the aromatic polyisocyanate include aromatic diisocyanates such as tolylene diisocyanate, xylylene diisocyanate, diphenylmethane diisocyanate, m-phenylene diisocyanate, and naphthalene diisocyanate; and trimer compounds of these polyisocyanates.

The alicyclic polyisocyanate is a compound having an alicyclic structure and having two or more isocyanate groups. No particular limitation is imposed on the alicyclic structure in the alicyclic polyisocyanate, but the number of carbon atoms in the alicyclic structure is generally 5 or more and preferably 6 or more and is preferably 15 or less, preferably 14 or less, and still more preferably 13 or less. The alicyclic structure is particularly preferably a cycloalkylene group. Examples of the alicyclic polyisocyanate include: diisocyanates having an alicyclic structure such as bis(isocyanatomethyl)cyclohexane, cyclohexane diisocyanate, bis(isocyanatocyclohexyl)methane, and isophorone diisocyanate; and trimer compounds of these polyisocyanates.

Only one of these polyisocyanate compounds (A) may be used for the ultraviolet curable oligomer in the first invention or the ultraviolet curable oligomer used in the second invention, or two or more of them may be used in combination. The polyisocyanate compound (A) used may be a polyisocyanate having two or more structures from among a chain aliphatic structure, an aromatic structure, and an alicyclic structure.

In particular, it is preferable from the viewpoint of adhesion to a substrate that the polyisocyanate compound (A) has 3 to 6 isocyanate groups. The polyisocyanate compound (A) is preferably a trimer obtained by a trimerization reaction of hexamethylene diisocyanate, trimethylhexamethylene diisocyanate, phenylene diisocyanate, etc. and is particularly preferably a trimer of hexamethylene diisocyanate.

### 1-1-2: Compound (B')

The compound (B') is a compound having two or more polymerizable unsaturated bonds and capable of bonding with the polyisocyanate compound (A).

The compound (B') may be a compound having any of a hydroxy group, an amino group, and a carboxyl group. Examples of the compound (B') include polyfunctional vinyl monomers, polyfunctional allyl monomers, and polyfunctional (meth)acrylates. In particular, the compound (B') is preferably the hydroxy group-containing polyfunctional (meth)acrylate (B).

The hydroxy group-containing polyfunctional (meth)acrylate (B) has at least one hydroxy group and two or more (meth)acryloyl groups. Specific examples include (meth)acrylic acid partial esters of polyhydric alcohols. In a curing reaction of the hydroxy group-containing polyfunctional (meth)acrylate, a plurality of (meth)acryloyl groups are involved in the curing reaction. Therefore, a good crosslinked structure is formed, and properties such as stain resistance and wear resistance can be improved.

The number of hydroxy groups in the hydroxy group-containing polyfunctional (meth)acrylate (B) is preferably 3 or less, more preferably 2 or less, and still more preferably 1. The number of (meth)acryloyl groups in the hydroxy group-containing polyfunctional (meth)acrylate (B) is preferably 8 or less and more preferably 6 or less.

Examples of the hydroxy group-containing polyfunctional (meth)acrylate (B) include pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2-hydroxy-1,3-dimethacryloxypropane, and 2-hydroxy-3-acryloyloxypropyl methacrylate.

Only one of these hydroxy group-containing polyfunctional (meth)acrylates (B) or a combination of two or more of them may be used to produce the ultraviolet curable oligomer in the first invention or the ultraviolet curable oligomer used in the second invention.

In particular, from the viewpoint of the coating strength of a cured film to be obtained, the hydroxy group-containing polyfunctional (meth)acrylate (B) has preferably one hydroxy group and 3 to 5 (meth)acryloyl groups and is, for example, dipentaerythritol penta(meth)acrylate or pentaerythritol tri(meth)acrylate. In particular, dipentaerythritol penta(meth)acrylate is preferred because a good crosslinked structure is formed to thereby improve the mechanical strength of the cured film.

### 1-1-3: Compound (C')

The compound (C') is a water-soluble compound capable of bonding with the polyisocyanate compound (A).

Preferably, the compound (C') is a compound having one terminal hydroxy group because good dispersibility in water is obtained.

As described above, the compound (C') may be a water-soluble polymer and is particularly preferably the polyalkylene glycol (C).

No limitation is imposed on the polyalkylene glycol (C), but it is preferable that the polyalkylene glycol (C) has a monosubstituted structure. Specifically, it is preferable that one of the hydroxy groups of the glycol is substituted. Preferably, the substituted structure is a structure that is not capable of bonding with isocyanate.

The polyalkylene glycol (C) may be a mixture of a compound having a monosubstituted structure and a compound having no monosubstituted structure.

No limitation is imposed on the monosubstituted structure. From the viewpoint of allowing the ultraviolet curable oligomer in the first invention or the ultraviolet curable oligomer used in the second invention to have a nonionic nature, the polyalkylene glycol (C) is preferably a polyalkylene glycol monosubstituted ether, more preferably a polyethylene glycol monosubstituted ether, a polytrimethylene glycol monosubstituted ether, or a polypropylene glycol monosubstituted ether, and still more preferably a polyethylene glycol monosubstituted ether.

No limitation is imposed on the molecular weight of the polyalkylene glycol (C) (when it is not a monodispersed glycol, the molecular weight means its number average molecular weight). The molecular weight is generally 100 or more and preferably 200 or more and is generally 5000 or less and preferably 2000 or less.

The polyalkylene glycol monosubstituted ether is more preferably a polyalkylene glycol monosubstituted ether having no ionic substituent in the ether moiety and more preferably, for example, a polyalkylene glycol monosubstituted ether represented by the following general formula (1).

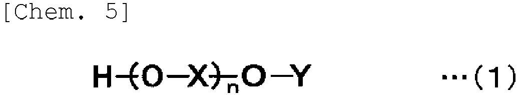

(In formula (1), X is an alkylene group, Y is any of an alkyl group, a (meth)acryloyl group, an allyl group, and an acyl group. n is an integer of 2 or more.)

Specific examples of the polyalkylene glycol monosubstituted ether represented by general formula (1) above include the following ethers.

Y = an alkyl group: polyethylene glycol monomethyl ether, polyethylene glycol lauryl ether, polyethylene glycol cetyl ether, polyethylene glycol stearyl ether, polyethylene glycol tridecyl ether, polyethylene glycol oleyl ether, polyethylene glycol octyl phenyl ether, polyoxyethylene oleyl cetyl ether, polypropylene glycol monomethyl ether, etc.

Y = a (meth)acryloyl group: polyethylene glycol mono(meth)acrylate, polypropylene glycol mono(meth)acrylate, poly(ethylene glycol-propylene glycol) mono(meth)acrylate, poly(ethylene glycol-tetramethylene glycol) mono(meth)acrylate, poly(propylene glycol-tetramethylene glycol) mono(meth)acrylate, etc.

Y = an allyl group: polyethylene glycol monoallyl ether, polypropylene glycol monoallyl ether, poly(ethylene glycol-propylene glycol) monoallyl ether, etc.

Y = an acyl group: polyethylene glycol monolaurate, polypropylene glycol monolaurate, poly(ethylene glycol-propylene glycol) monolaurate, polyethylene glycol monostearate, polyethylene glycol monooleate, etc.

In particular, X in general formula (1) is preferably an alkylene group having 1 to 3 carbon atoms, more preferably an ethylene group, a trimethylene group, or a propylene group, and still more preferably an ethylene group from the viewpoint of pigment dispersion stability or high-temperature storage stability. From the viewpoint of coating strength, Y is preferably a (meth)acryloyl group, an allyl group, or an acyl group and more preferably an allyl group.

From the viewpoint of the coating strength of a cured film to be obtained, n in general formula (1) is generally 2 or more, preferably 5 or more, and more preferably 6 or more and is generally 500 or less, preferably 100 or less, and more preferably 50 or less.

To produce the ultraviolet curable oligomer in the first invention or the ultraviolet curable oligomer used in the second invention, only one of these polyalkylene glycols (C) may be used, or a combination of two or more of them may be used. The polyalkylene glycol (C) may be a mixture of compounds with different molecular weights (compounds with different n's in general formula (1)).

### 1-1-4: Method for producing ultraviolet curable oligomer

No particular limitation is imposed on the method for producing the ultraviolet curable oligomer in the first invention or the ultraviolet curable oligomer used in the second invention. Preferably, the ultraviolet curable oligomer is produced by reacting the polyisocyanate compound (A), the compound (B'), and the compound (C') to form chemical bonds.

When the compound (B') is the hydroxy group-containing polyfunctional (meth)acrylate (B) and the compound (C') is the polyalkylene glycol (C), it is preferable to produce the ultraviolet curable oligomer by reacting the polyisocyanate compound (A), the hydroxy group-containing polyfunctional (meth)acrylate (B), and the polyalkylene glycol (C) so that isocyanate groups in the polyisocyanate compound (A) together with a hydroxy group in the hydroxy group-containing polyfunctional (meth)acrylate (B) and a hydroxy group in the polyalkylene glycol (C) form urethane bonds.

In the present invention, from the viewpoint of pigment dispersion stability and the coating strength of a cured film to be obtained, it is preferable to produce the oligomer by reacting two hydroxy group-containing polyfunctional (meth)acrylate (B) molecules and one polyalkylene glycol (C) molecule with the polyisocyanate compound (A) to form urethane bonds.

The ultraviolet curable oligomer may further have an additional structure so long as the oligomer has the structural unit derived from the polyisocyanate compound (A), the structural unit derived from the compound (B'), and the structural unit derived from the compound (C').

### 1-1-5: Weight average molecular weight

From the viewpoint of the performance of a coating to be formed and its handleability, the polystyrene-equivalent weight average molecular weight of the ultraviolet curable oligomer in the first invention or the ultraviolet curable oligomer used in the second invention is generally 1000 or more and preferably 2000 or more and is generally 100000 or less and preferably 50000 or less as measured by gel permeation chromatography (GPC).

### 1-1-6: Average particle diameter

In the ink of the invention, the ultraviolet curable oligomer in the first invention or the ultraviolet curable oligomer used in the second invention is present in a water-based medium preferably as particles with an average particle diameter of from 10 nm to 200 nm inclusive and more preferably as particles with an average particle diameter of from 20 nm to 150 nm inclusive. When the average particle diameter of the ultraviolet curable oligomer in the first invention or the ultraviolet curable oligomer used in the second invention is in the above range, dispersion stability is improved.

The average particle diameter of the ultraviolet curable oligomer is its volume average particle diameter (D₅₀) measured using, for example, a particle diameter measuring apparatus by a dynamic light scattering method.

In Examples described later, the average particle diameter of ultraviolet curable oligomer particles in a water dispersion of the ultraviolet curable oligomer was measured. The average particle diameter of the oligomer particles in the water dispersion is approximately the same as the average particle diameter of the oligomer particles in the ink.

In the ink of the invention, the phrase "present as particles" is intended to encompass the state in which the ultraviolet curable oligomer is present as aggregated particles and the state in which the particles contain another material thereinside.

The average particle diameter of the ultraviolet curable oligomer means the particle diameter (primary particle diameter) of the ultraviolet curable oligomer particles.

Components other than the ultraviolet curable oligomer that are contained in the ink of the invention will be described.

### 1-2: Colorant

The ink of the invention contains a colorant.

The colorant used in the ink of the invention is a colorant used for inkjet inks and may be any of various known dyes and pigments. From the viewpoint of irradiation with ultraviolet rays and long-term durability of printed images, it is preferable to use a pigment.

### 1-2-1: Dye

No particular limitation is imposed on the dye that can be used in the present invention. Examples of the dye include: water-soluble dyes such as acidic dyes, direct dyes, and reactive dyes; and disperse dyes. Of these, anionic dyes are preferred.

Examples of the water-soluble dyes include azo dyes, methine dyes, azomethine dyes, xanthene dyes, quinone dyes, phthalocyanine dyes, triphenylmethane dyes, and diphenylmethane dyes. Specific examples of the water-soluble dye compound are as follows, but the water-soluble dye compound is not limited to the exemplified compounds.
<C.I. Acid yellow>
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, and 246
<C.I. Acid Orange>
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, and 168
<C.I. Acid Red>
   88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, and 415
<C.I. Acid Violet>
   17, 19, 21, 42, 43, 47, 48, 49, 54, 66, 78, 90, 97, 102, 109, and 126
<C.I. Acid Blue>
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, and 350
<C.I. Acid Green>
   9, 12, 16, 19, 20, 25, 27, 28, 40, 43, 56, 73, 81, 84, 104, 108, and 109
<C.I. Acid Brown>
   2, 4, 13, 14, 19, 28, 44, 123, 224, 226, 227, 248, 282, 283, 289, 294, 297, 298, 301, 355, 357, and 413
<C.I. Acid Black>
   1, 2, 3, 24, 26, 31, 50, 52, 58, 60, 63, 107, 109, 112, 119, 132, 140, 155, 172, 187, 188, 194, 207, and 222
<C.I. Direct Yellow>
   8, 9, 10, 11, 12, 22, 27, 28, 39, 44, 50, 58, 79, 86, 87, 98, 105, 106, 130, 132, 137, 142, 147, and 153
<C.I. Direct Orange>
   6, 26, 27, 34, 39, 40, 46, 102, 105, 107, and 118
<C.I. Direct Red>
   2, 4, 9, 23, 24, 31, 54, 62, 69, 79, 80, 81, 83, 84, 89, 95, 212, 224, 225, 226, 227, 239, 242, 243, and 254
<C.I. Direct Violet>
   9, 35, 51, 66, 94, and 95
<C.I. Direct Blue>
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, and 291
<C.I. Direct Green>
   26, 28, 59, 80, and 85
<C.I. Direct Brown>
   44, 106, 115, 195, 209, 210, 222, and 223
<C.I. Direct Black>
   17, 19, 22, 32, 51, 62, 108, 112, 113, 117, 118, 132, 146, 154, 159, and 169
<C.I. Basic Yellow>
   1, 2, 11, 13, 15, 19, 21, 28, 29, 32, 36, 40, 41, 45, 51, 63, 67, 70, 73, and 91
<C.I. Basic Orange>
   2, 21, and 22
<C.I. Basic Red>
   1, 2, 12, 13, 14, 15, 18, 23, 24, 27, 29, 35, 36, 39, 46, 51, 52, 69, 70, 73, 82, and 109
<C.I. Basic Violet>
   1, 3, 7, 10, 11, 15, 16, 21, 27, and 39
<C.I. Basic Blue>
   1, 3, 7, 9, 21, 22, 26, 41, 45, 47, 52, 54, 65, 69, 75, 77, 92, 100, 105, 117, 124, 129, 147, and 151
<C.I. Basic Green>
   1 and 4
<C.I. Basic Brown>
   1
<C.I. Reactive Yellow>
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, and 176
<C.I. Reactive Orange>
   1, 4, 5, 7, 11, 12, 13, 15, 16, 20, 30, 35, 56, 64, 67, 69, 70, 72, 74, 82, 84, 86, 87, 91, 92, 93, 95, and 107
<C.I. Reactive Red>
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, and 235
<C.I. Reactive Violet>
   1, 2, 4, 5, 6, 22, 23, 33, 36, and 38
<C.I. Reactive Blue>
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, and 236
<C.I. Reactive Green>
   8, 12, 15, 19, and 21
<C.I. Reactive Brown>
   2, 7, 9, 10, 11, 17, 18, 19, 21, 23, 31, 37, 43, and 46
<C.I. Reactive Black>
   5, 8, 13, 14, 31, 34, and 39
<C.I. Food Black>
   1 and 2

### 1-2-2: Pigment

The pigment used may be any of conventionally known organic and inorganic pigments. Examples of the pigment include: azo pigments such as azo lakes, insoluble azo pigments, condensed azo pigments, and chelate azo pigments; polycyclic pigments such as phthalocyanine pigments, perylene and perylene pigments, anthraquinone pigments, quinacridone pigments, dioxanzine pigments, thioindigo pigments, isoindolinone pigments, and quinophthaloni pigments; dye lakes such as basic dye lakes and acidic dye lakes; organic pigments such as nitro pigments, nitroso pigments, aniline black, and daylight fluorescent pigments; and inorganic pigments such as carbon black and titanium oxide-based and iron oxide-based pigments. Of these, anionic pigments are preferred.

Specific examples of the organic pigment are as follows.

### <Magenta and red pigments>

C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 150, C.I. Pigment Red 166, C.I. Pigment Red 177, C.I. Pigment Red 178, C.I. Pigment Red 222, etc.

### <Orange and yellow pigments>

C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 155, etc.

### <Green and cyan pigments>

C.I. Pigment Blue 15, C.I. Pigment Blue 15:2, C.I. Pigment Blue 15:3, C.I. Pigment Blue 16, C.I. Pigment Blue 60, C.I. Pigment Green 7, etc.

Only one of these dyes and pigments may be used, or two or more may be used in combination.

### 1-3: Compound (I)

The ink of the second invention contains the compound (I) represented by the following general formula (I).

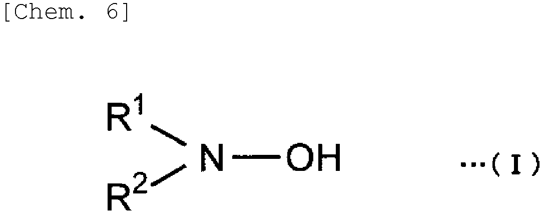

(In formula (I), R¹ and R² each independently represent an alkyl group having 1 to 10 carbon atoms.)

The inventor of the second invention has found that, when the compound (I) is contained, an increase in viscosity during storage at high temperature is prevented, so that the storage stability of the ink at high temperature is improved.

The inventor has found a phenomenon in which, when the ink is stored at high temperature, the viscosity of the ink increases. This may be due to self-aggregation of the particles of the ultraviolet curable oligomer and aggregation of the particles of the ultraviolet curable oligomer and the particles of the pigment. The second invention is based on the novel finding that, when a compound corresponding to the compound (I) is contained, the above phenomenon is surprisingly prevented.

The compound (I) also has the effect of improving the curability of the ink of the second invention to thereby improve the coating strength of the ink.

No particular limitation is imposed on the compound (I) used in the second invention so long as it has a hydroxy group bonded directly to a nitrogen atom and two alkyl groups having 1 to 10 carbon atoms are bonded to the nitrogen atom. Specific examples of the compound (I) include N,N-dialkylhydroxylamines including alkyl groups having 1 to 10 carbon atoms such as N,N-diethylhydroxylamine, N,N-dimethylhydroxylamine, N,N-dipropylhydroxylamine, N,N-dibutylhydroxylamine, N,N-methylethylhydroxylamine, N,N-ethylpropylhydroxylamine, N,N-propylbutylhydroxylamine, and N,N-didecylhydroxylamine.

Only one compound (I) may be used, or a mixture of two or more may be used.

The compound (I) is preferably an N,N-dialkylhydroxylamine including alkyl groups having 1 to 4 carbon atoms and particularly preferably N,N-diethylhydroxylamine because the effect of preventing an increase in viscosity during storage at high temperature is high.

### 1-4: Water-based medium

The ink of the invention is a water-based ink, and the "water-based ink" means an ink containing a water-based medium. The water-based medium is water and/or a water-soluble organic solvent.

The water-based medium used in the present invention is preferably water or a mixture of water and a water-soluble organic solvent.

The water-soluble organic solvent may be a solvent that functions as a moisturizing solvent for improving the moisture retention of the ink and ink wettability or a water-based medium used to adjust the viscosity of the ink and its handleability and improve dischargeability. However, these solvents are not clearly distinguished from each other, and the water-soluble organic solvent used as the moisturizing solvent can function as the water-based medium.

In the present invention, the water-soluble organic solvent means a compound soluble in water, but no limitation is imposed on the solubility in water. Preferably, the water-soluble organic solvent is a compound capable of dissolving in water at a given ratio. The water-soluble organic solvent is intended to encompass a compound that alone does not easily exhibit the properties as a solvent (e.g., a compound that is solid or highly viscous at room temperature) but can be used as a solvent when uniformly mixed with water.

Examples of the water-soluble organic solvent include polyhydric alcohols, ethers such as polyhydric alcohol alkyl ethers and polyhydric alcohol aryl ethers, nitrogen-containing heterocyclic compounds, amides, amines, and sulfur-containing compounds.

Specific examples of the water-soluble organic solvent include: polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyhydric alcohol alkyl ethers such as ethylene glycol monoethyl ether, ethylene glycol monobutyl ether, diethylene glycol monomethyl ether, diethylene glycol monoethyl ether , diethylene glycol monobutyl ether, tetraethylene glycol monomethyl ether, propylene glycol monomethyl ether, and propylene glycol monoethyl ether; polyhydric alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethylpropionamide, and 3-butoxy-N,N-dimethylpropionamide; amines such as monoethanolamine, diethanolamine, and triethylamine; sulfur-containing compounds such as dimethyl sulfoxide, sulfolane, and thiodiethanol; propylene carbonate; and ethylene carbonate.

The water-soluble organic solvent used is preferably an organic solvent having a boiling point of 250°C or lower because not only does it function as a moisturizing solvent but also good drying properties are obtained.

A polyol compound having 8 or more carbon atoms or a glycol ether compound is also preferably used as the water-soluble organic solvent.

Specific examples of the polyol compound having 8 or more carbon atoms include 2-ethyl-1,3-hexanediol and 2,2,4-trimethyl-1,3-pentanediol.

Specific examples of the glycol ether compound include: polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers such as ethylene glycol monophenyl ether and ethylene glycol monobenzyl ether.

Only one of these water-soluble organic solvents may be used, or a mixture of two or more may be used.

### 1-5: Polymerization initiator

Preferably, the ink of the invention contains a polymerization initiator.

The polymerization initiator is a photo-radical polymerization initiator that, when irradiated with UV rays, generates radicals, i.e., an active species, upon reception of the energy of the light (UV rays) to thereby initiate photopolymerization of the ultraviolet curable oligomer. In this manner, the ink present on the surface of a recording medium is cured, and an image can thereby be formed.

The polymerization initiator may be contained in the ink such that the initiator is not contained inside the particles of the ultraviolet curable oligomer or may be contained in the ink such that the initiator is contained inside the particles of the ultraviolet curable oligomer. Moreover, the polymerization initiator may be contained in the ink so as to satisfy both the states.

The polymerization initiator may be a fat-soluble polymerization initiator (hereinafter may be referred to as a "fat-soluble initiator") or a water-soluble polymerization initiator (hereinafter may be referred to as a "water-soluble initiator").

The "fat-soluble initiator" is a polymerization initiator that is compatible with the ultraviolet curable oligomer or dissolves in the organic solvent. The "water-soluble initiator" dissolves in water in an amount of 1% by mass or more. The same applies to a "fat-soluble sensitizer" and a "water-soluble sensitizer" described later.

Examples of the polymerization initiator used in the present invention include, but not limited to, aromatic ketones, acylphosphine oxide compounds, aromatic onium salt compounds, organic peroxides, thio compounds (thioxanthone compounds and thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

In particular, the polymerization initiator contains preferably at least any of the acylphosphine oxide compounds and the thioxanthone compounds. By using such a polymerization initiator, the curability of the ink tends to be further improved.

Examples of the fat-soluble polymerization initiator include, but not limited to, acetophenone, 2,2-diethoxyacetophenone, p-dimethylaminoacetophenone, benzophenone, 2-chlorobenzophenone, p,p'-dichlorobenzophenone, p,p'-bisdiethylaminobenzophenone, Michler's ketone, benzil, benzoin, benzoin methyl ether, benzoin ethyl ether, benzoin isopropyl ether, benzoin-n-propyl ether, benzoin isobutyl ether, benzoin-n-butyl ether, benzil methyl ketal, 2,2-dimethoxy-1,2-diphenylethan-1-one, 1-hydroxycyclohexyl phenyl ketone, 2-hydroxy-1-{4-[4-(2-hydoxy-2-methylpropionyl) benzyl]phenyl}2-methylpropan-1-one, 2-benzyl-2-dimethylamino-1-(4-morpholinophenyl)butanone-1, 2-dimethylamino-2-(4-methylbenzyl)-1-(4-morpholin-4-yl-phenyl)butan-1-one, 2,4,6-trimethylbenzoyldiphenylphosphine oxide, bis(2,4,6-trimethylbenzoyl)phenylphosphine oxide, bis(2,6-dimethoxybenzoyl)-2,4,4-trimethylpentylphosphine oxide, 2-methyl-1-[4-(methylthio)phenyl]2-morpholinopropan-1-one, thioxanthone, 2-chlorothioxanthone, 2-methylthioxanthone, 2-isopropylthioxanthone, 4-isopropylthioxanthone, 2-hydroxy-2-methyl-1-phenyl-1-one, 1-(4-isopropylphenyl)-2-hydroxy-2-methylpropan-1-one, methyl benzophil formate, azobisisobutyronitrile, benzoyl peroxide, and di-tert-butyl peroxide.

Examples of the water-soluble polymerization initiator include, but not limited to, 1-[4-(2-hydroxyethoxy)-phenyl]-2-hydroxy-2-methyl-1-propan-1-one, phenyl(2,4,6-trimethylbenzoyl)phosphinic acid sodium salt, and 2-(3-dimethylamino-2-hydroxypropoxy)-3,4-dimethyl-9H-thioxanthone-9-one methochloride.

Commercial examples of the polymerization initiator include: GENOPOL TX-2 manufactured by RAHN; and Irgacure 369, Irgacure 500, and Irgacure 2959 manufactured by Ciba Specialty Chemicals.

One polymerization initiator may be used alone, or a combination or two or more may be used. For example, a combination of a fat-soluble initiator and a water-soluble initiator may be used. In this case, the fat-soluble initiator may be contained inside the particles of the ultraviolet curable oligomer, and the water-soluble initiator may be dissolved in the water-based medium.

The polymerization initiator may be a combination of any of the above photo-radical polymerization initiators and a thermal radical polymerization initiator.

### 1-6: Surfactant

Preferably, the ink of the invention contains a surfactant in terms of the flatness of a coating to be formed and the wettability of a substrate.

As the surfactant, any of a silicone-based surfactant, a fluorine-based surfactant, an amphoteric surfactant, a nonionic surfactant, and an anionic surfactants can be used.

No particular limitation is imposed on the silicone-based surfactant, and an appropriate surfactant may be selected according to the intended purpose. In particular, a silicone-based surfactant that does not decompose at a high pH is preferred, and examples of such a silicone-based surfactant include side chain-modified polydimethylsiloxane, both end-modified polydimethylsiloxane, one end-modified polydimethylsiloxane, and side chain/both end-modified polydimethylsiloxane. Of these, a silicone-based surfactant having a polyoxyethylene group or a polyoxyethylene polyoxypropylene group as a modifying group is particularly preferred because it exhibits good properties as a water-based surfactant. The silicone-based surfactant used may be a polyether-modified silicone-based surfactant, and examples thereof include a compound having a polyalkylene oxide structure introduced into a side chain of a Si site of dimethyl siloxane.

The fluorine-based surfactant is preferably a fluorine-substituted compound having 2 to 16 carbon atoms and more preferably a fluorine-substituted compound having 4 to 16 carbon atoms.

The fluorine-based surfactant is preferably, for example, a perfluoroalkyl sulfonic acid compound, a perfluoroalkyl carboxylic acid compound, a perfluoroalkyl phosphate compound, a perfluoroalkyl alkylene oxide adduct, or a polyoxyalkylene ether polymer compound having a perfluoroalkyl ether group in its side chain because their foamability is small. Examples of the perfluoroalkyl sulfonic acid compound include perfluoroalkyl sulfonic acids and perfluoroalkyl sulfonates. Examples of the perfluoroalkyl carboxylic acid compound include perfluoroalkyl carboxylic acids and perfluoroalkyl carboxylates. Examples of the perfluoroalkyl phosphate compound include perfluoroalkyl phosphates and perfluoroalkyl phosphoric acid ester salts. Examples of the perfluoroalkyl alkylene oxide adduct include perfluoroalkyl ethylene oxide adducts. Examples of the polyoxyalkylene ether polymer compound having a perfluoroalkyl ether group in its side chain include sulfates of polyoxyalkylene ether polymers having a perfluoroalkyl ether group in their side chain and salts of polyoxyalkylene ether polymers having a perfluoroalkyl ether group in their side chain. Examples of the counter ions of the salts in the fluorine-based surfactants include Li, Na, K, NH₄, NH₃CH₂CH₂OH, NH₂(CH₂CH₂OH)₂, and NH(CH₂CH₂OH)₃.

Of these, the polyoxyalkylene ether polymer compound having a perfluoroalkyl ether group in its side chain is more preferred because its foamability is particularly low. In particular, fluorine-based surfactants represented by general formulas (3A) and (3B) are preferred.

CF₃CF₂(CF₂CF₂)ₛ-CH₂CH₂O(CH₂CH₂O)ₜH (3A)

In the compound represented by general formula (3A), s is preferably from 0 to 10 inclusive, and t is preferably an integer of from 0 to 40 inclusive in order to impart water solubility.

CᵣF₂ᵣ₊₁-CH₂CH(OH)CH₂-O-(CH₂CH₂O)_{c}-Z (3B)

In the compound represented by general formula (3B), Z is H, CnF_{2d+1} with d being an integer of from 1 to 6 inclusive, CH₂CH(OH)CH₂-CnF₂ₑ₊₁ with e being an integer of from 4 to 6 inclusive, or CpH_{2f+1} with f being an integer of from 1 to 19 inclusive. c is an integer of from 4 to 14 inclusive.

A commercial product may be used as the fluorine-based surfactant. Examples of the commercial product include: SURFLON S-111, S-112, S-113, S-121, S-131, S-132, S-141, and S-145 (all manufactured by Asahi Glass Co., Ltd.); Fluorad FC-93, FC-95, FC-98, FC-129, FC-135, FC-170C, FC-430, and FC-431 (all manufactured by Sumitomo 3M Limited); MEGAFACE F-470, F-1405, and F-474 (all manufactured by DIC Corporation); Zonyl TBS, FSP, FSA, FSN-100, FSN, FSO-100, FSO, FS-300, and UR (all manufactured by DuPont); FT-110, FT-250, FT-251, FT-400S, FT-150, and FT-400SW (all manufactured by NEOS Company Limited); Polyfox PF-136A,PF-156A, PF-151N, PF-154, and PF-159 (manufactured by OMNOVA Solutions Inc.), NOIGEN FN-1287 (manufactured by DAI-ICHI KOGYO SEIYAKU Co., Ltd.); UNIDYNE DSN-403N (manufactured by DAIKIN INDUSTRIES, Ltd.); and LE-604, LE-605, LE-606, and LE-607 (manufactured by KYOEISHA CHEMICAL Co., Ltd.).

Examples of the amphoteric surfactant include laurylaminopropionic acid salts, lauryldimethylbetaine, stearyldimethylbetaine, and lauryldihydroxyethylbetaine.

Examples of the nonionic surfactant include polyoxyethylene alkyl phenyl ethers, polyoxyethylene alkyl esters, polyoxyethylene alkyl amines, polyoxyethylene alkyl amides, polyoxyethylene propylene block polymers, sorbitan fatty acid esters, polyoxyethylene sorbitan fatty acid esters, acetylene alcohol derivatives, and acetylene glycol derivatives.

Examples of the anionic surfactant include polyoxyethylene alkyl ether acetates, dodecylbenzenesulfonate, laurates, and polyoxyethylene alkyl ether sulfates.

One of them may be used alone, or two or more of them may be used in combination.

No particular limitation is imposed on the silicone-based surfactant as described above, and an appropriate surfactant may be selected according to the intended purpose. A polyether-modified silicone-based surfactant having a polyoxyethylene group or a polyoxyethylene polyoxypropylene as a modifying group is particularly preferred because it exhibits good properties as a water-based surfactant.

A synthesized product or a commercial product may be appropriately used as such a surfactant. Examples of the commercial product include those available from BYK-Chemie, Shin-Etsu Chemical Co., Ltd., Dow Corning Toray Silicone Co., Ltd., Nihon Emulsion Co., Ltd., and KYOEISHA CHEMICAL Co., Ltd.

No particular limitation is imposed on the polyether-modified silicone-based surfactant, and an appropriate surfactant may be selected according to the intended purpose. The polyether-modified silicone-based surfactant may be, for example, a surfactant represented by general formula (2) below in which a polyalkylene oxide structure is introduced into a side chain of a Si site of dimethyl polysiloxane.

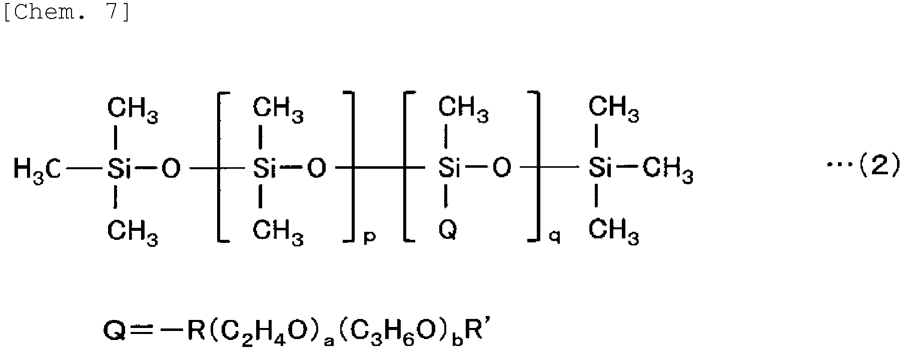

(In formula (2), p, q, a, and b represent integers. R and R' represent hydrocarbon groups.)

The polyether-modified silicone-based surfactant used may be a commercial product. Examples of the commercial product include: KF-618, KF-642, and KF-643 (Shin-Etsu Chemical Co., Ltd.); SAG001, SAG002, SAG003, SAG005, SAG503, and SAG008 (Nissin Chemical Co., Ltd.); EMALEX-SS-5602 and SS-1906EX (Nihon Emulsion Co., Ltd.); FZ-2105, FZ-2118, FZ-2154, FZ-2161, FZ-2162, FZ-2163, and FZ-2164 (Dow Corning Toray Silicone Co., Ltd.); BYK-33 and BYK-387 (BYK-Chemie); and TSF4440, TSF4452, and TSF4453 (Toshiba Silicone Co., Ltd.).

### 1-7: Sensitizer

The ink of the invention may contain a sensitizer. When the sensitizer is present, together with the polymerization initiator, in the ink, the sensitizer in the system absorbs active energy rays and is excited. Then the sensitizer in the excited state comes into contact with the polymerization initiator to facilitate the decomposition of the polymerization initiator, and therefore the curing reaction can proceed with improved sensitivity.

The sensitizer may be fat soluble or water soluble, as is the polymerization initiator. A fat-soluble sensitizer can be contained inside the particles of the ultraviolet curable oligomer.

The sensitizer used may be an aliphatic amine, an amine having an aromatic group, a cyclic amine-based compound such as piperidine, a thioxanthone compound, an alkoxyanthracene compound, a urea-based compound such as o-tolylthiourea, a sulfur compound such as sodium diethyl thiophosphate or a soluble salt of aromatic sulfinic acid, a nitrile compound such as N,N'-disubstituted-p-aminobenzonitrile, a phosphorus compound such as tri-n-butylphosphine or sodium diethyl dithiophosphate, Michler's ketone, an N-nitrosohydroxylamine derivative, an oxazolidine compound, a tetrahydro-1,3-oxazine compound, or a nitrogen compound such as a condensation product of a diamine and formaldehyde or acetaldehyde.

Only one of these sensitizers may be used, or a combination of two or more may be used.

### 1-8: Additional oligomer, resin, and monomer

The ink of the invention may optionally contain, in addition to the above components, an oligomer component other than the ultraviolet curable (meth)acrylate oligomer in the first invention and the ultraviolet curable oligomer used in the second invention, an optional resin component, and an optional monomer component (these components are referred to collectively as "additional resin components"). The additional resin components may be contained inside the particles of the ultraviolet curable oligomer, may be dissolved in the water-based medium, may be mono-dispersed in the ink, or may form a complex with another component.

### 1-9: Additional additives

The ink of the invention may optionally contain additional additives in addition to the above components.

Examples of the additional additives include well-known additives such as a fading inhibitor, an emulsion stabilizer, a penetration promoter, an ultraviolet absorber, a preservative, an antifungal agent, an anticorrosive, a pH modifier, a viscosity modifier, a dispersant, a dispersion stabilizer, an antifoaming agent, a solid humectant, and a chelating agent. These additives may be added directly to the prepared ink or may be added during preparation of the ink.

As for the additional additives, description in paragraphs 0088 to 0096 in JP2010-65205A and description in paragraphs 0083 to 0090 in JP2010-70669A may be referred to as appropriate.

### 1-10: Contents of components

No particular limitation is imposed on the content of water in the ink of the invention, and the water content may be appropriately selected according to the intended purpose. From the viewpoint of the drying properties of the ink and its discharge stability, the water content is generally 10% by mass or more and preferably 20% by mass or more and is generally 90% by mass or less and preferably 80% by mass or less.

When the ink of the invention contains the water-soluble organic solvent, no particular limitation is imposed on its content (the total content of the water-soluble organic solvent serving also as a moisturizing solvent and the water-soluble organic solvent used as a water-based medium), and the content may be appropriately selected according to the type of water-soluble organic solvent and the intended purpose. In terms of drying properties, discharge stability, the wettability of a substrate, etc., the content of the water-soluble organic solvent is generally 10% by mass or more and is generally 50% by mass or less and preferably 40% by mass or less.

In the ink of the invention, the total concentration of solids that are components other than the water-based medium including water and/or the water-soluble organic solvent is adjusted to generally 5% by mass or more, preferably 7% by mass or more, and more preferably 9% by mass or more and to generally 30% by mass or less, preferably 25% by mass or less, more preferably 20% by mass or less, and still more preferably 15% by mass or less, from the viewpoint of drying properties and discharge stability.

When the water-based medium used is a solution mixture of water and the water-soluble organic solvent, the ratio of the water to the water-soluble organic solvent (the total amount of the water-soluble organic solvent serving also as a moisturizing solvent and the water-soluble organic solvent used as a water-based medium), i.e., the water:the water-soluble organic solvent, is generally 1:0.05 to 1:1.5 (mass ratio), preferably 1:0.1 to 1:1.2 (mass ratio), and more preferably 1:0.15 to 1:1.1 (mass ratio), from the viewpoint of improving drying properties and dischargeability.

The content of the ultraviolet curable oligomer (in the first invention, the ultraviolet curable (meth)acrylate oligomer in the first invention) in the ink of the invention is generally 3% by mass or more, preferably 5% by mass or more, and more preferably 7% by mass or more from the viewpoint of the performance of a printed coating to be obtained and ultraviolet curability and is generally 20% by mass or less, preferably 15% by mass or less, and more preferably 12% by mass or less from the viewpoint of discharge stability.

From the same viewpoints, the content of the ultraviolet curable oligomer relative to the total amount of solids in the ink of the invention is generally 30% by mass or more, preferably 50% by mass or more, and more preferably 60% by mass or more and is generally 90% by mass or less, preferably 85% by mass or less, and more preferably 80% by mass or less.

The above numerical ranges relative to the total amount of the solids in the ink of the invention may be used equivalently to numerical ranges relative to the amount of components in a cured film (printed film) formed from the ink of the invention. The contents of the components relative to the total amount of the solids are substantially the same as the contents of the components in the cured film (printed film) formed from the ink of the invention.

As described above, the content of the ultraviolet curable oligomer relative to the total amount of the solids in the ink of the invention is generally 30% by mass or more, preferably 50% by mass or more, and more preferably 60% by mass or more and is generally 90% by mass or less, preferably 85% by mass or less, and more preferably 80% by mass or less. This is equivalent to saying that the content of a component derived from the ultraviolet curable oligomer in a cured film (printed film) formed from the ink of the invention is generally 30% by mass or more, preferably 50% by mass or more, and more preferably 60% by mass or more and is generally 90% by mass or less, preferably 85% by mass or less, and more preferably 80% by mass or less.

The same applies to the contents of other components such as the colorant.

From the viewpoint of improving the density of images and obtaining good fixability and discharge stability, the content of the colorant in the ink of the invention is generally 0.1% by mass or more and preferably 1% by mass or more and is generally 8% by mass or less and preferably 6% by mass or less.

From the same point of view, the content of the colorant relative to the total amount of the solids in the ink of the invention is generally 1% by mass or more and preferably 5% by mass or more and is generally 40% by mass or less and preferably 30% by mass or less.

From the viewpoint of preventing an increase in the viscosity of the ink of the second invention during storage at high temperature to obtain the effect of increasing the high-temperature storage stability of the ink, the content of the compound (I) in the ink of the second invention is generally 0.01% by mass or more, preferably 0.03% by mass or more, more preferably 0.05% by mass or more, still more preferably 0.08% by mass or more, and particularly preferably 0.30% by mass or more. From the viewpoint of increasing curability, the content of the compound (I) is generally 5% by mass or less, preferably 3% by mass or less, more preferably 2% by mass or less, and still more preferably 1% by mass or less.

From the same viewpoints, the content of the compound (I) relative to the total amount of the solids in the ink of the second invention is generally 0.05% by mass or more, preferably 0.1% by mass or more, more preferably 0.3% by mass or more, and still more preferably 0.5% by mass or more and is generally 10% by mass or less, preferably 7% by mass or less, and more preferably 5% by mass or less.

When the ink of the invention contains the polymerization initiator, its content is generally 0.05% by mass or more, preferably 0.1% by mass or more, more preferably 0.3% by mass or more, and still more preferably 0.4% by mass or more and is generally 8% by mass or less, preferably 5% by mass or less, more preferably 3% by mass or less, still more preferably 2% by mass or less, and particularly preferably 1% by mass or less. When the content of the polymerization initiator is in the above range, the curing speed can be improved sufficiently. Moreover, the amount of the undissolved portion of the polymerization initiator can be reduced, and coloration caused by the polymerization initiator can be avoided.

From the same point of view, the content of the polymerization initiator relative to the total amount of the solids in the ink of the invention is generally 0.5% by mass or more, preferably 1% by mass or more, more preferably 2% by mass or more, and still more preferably 3% by mass or more and is generally 20% by mass or less, more preferably 15% by mass or less, still more preferably 10% by mass or less, and particularly preferably 8% by mass or less.

When the ink of the invention contains the surfactant, no particular limitation is imposed on the content of the surfactant, and the content may be appropriately selected according to the intended purpose. From the viewpoint of obtaining good wettability and discharge stability and improving the quality of images, the content of the surfactant in the ink is generally 0.001% by mass or more, preferably 0.01% by mass or more, and more preferably 0.03% by mass or more and is generally 5% by mass or less, preferably 3% by mass or less, and more preferably 1% by mass or less.

From the same point of view, the content of the surfactant relative to the total amount of the solids in the ink of the invention is generally 0.01% by mass or more, preferably 0.1% by mass or more, and more preferably 0.2% by mass or more and is generally 10% by mass or less, preferably 5% by mass or less, and more preferably 3% by mass or less.

When the ink of the invention contains the sensitizer, its content is generally 0.01% by mass or more, preferably 0.03% by mass or more, and more preferably 0.05% by mass or more and is generally 4% by mass or less, preferably 3% by mass or less, more preferably 1% by mass or less, and still more preferably 0.7% by mass or less. When the content of the sensitizer is in the above range, the effect of the sensitizer can be obtained sufficiently.

From the same point of view, the content of the sensitizer relative to the total amount of the solids in the ink of the invention is generally 0.05% by mass or more, preferably 0.1% by mass or more, more preferably 0.3% by mass or more, and still more preferably 0.5% by mass or more and is generally 8% by mass or less, preferably 6% by mass or less, and more preferably 5% by mass or less.

### 2: Ultraviolet curable water-based composition for inkjet printing

An ultraviolet curable water-based composition for inkjet printing of the first invention (which hereinafter may be referred to as a "water-based composition of the first invention") is a water-based composition containing an ultraviolet curable oligomer and at least one of a polymerization initiator, a sensitizer, and a surfactant and is characterized in that the ultraviolet curable oligomer is the above-described ultraviolet curable oligomer in the first invention.

The ultraviolet curable water-based composition for inkjet printing of the first invention is a water-based composition and contains a water-based medium, as does the ink of the first invention. Specifically, the water-based composition of the first invention corresponds to an embodiment of the ink of the first invention in which the colorant is not contained. The water-based medium, the polymerization initiator, the sensitizer, the surfactant, and other additives contained in the water-based composition are the same as those described above for the ink of the invention, and their contents are also the same as those for the ink of the invention except for the colorant.

An ultraviolet curable water-based composition for inkjet printing of the second invention (which hereinafter may be referred to as a "water-based composition of the second invention") is an ultraviolet curable water-based composition for inkjet printing that contains an ultraviolet curable oligomer and at least one of a polymerization initiator, a sensitizer, and a surfactant and is characterized by further containing the compound (I) described above.

The ultraviolet curable water-based composition for inkjet printing of the second invention is a water-based composition and contains a water-based medium, as does the ink of the second invention. In the water-based composition of the second invention, the ultraviolet curable oligomer is preferably nonionic, is preferably the ultraviolet curable oligomer in the first invention, and is particularly preferably an ultraviolet curable (meth)acrylate oligomer having the structural unit derived from the polyisocyanate compound (A), the structural unit derived from the hydroxy group-containing polyfunctional (meth)acrylate (B), and the structural unit derived from the polyalkylene glycol (C).

Specifically, the water-based composition of the second invention corresponds to an embodiment of the ink of the second invention in which the colorant is not contained. The ultraviolet curable oligomer, the compound (I), the water-based medium, the polymerization initiator, the sensitizer, the surfactant, and additional additives contained in the water-based composition of the second invention are the same as those described above for the ink of the invention, and the contents of the components are the same as those described above for the ink of the invention except for the colorant.

No particular limitation is imposed on the mode of use of the water-based composition of the invention. In one preferred mode of use, any of the colorants described above is added to the water-based composition of the invention to prepare the ink of the invention. One colorant or two or more colorants with different colors may be added. By adding two or more colorants with different colors, the tint of the ink can be adjusted to a desirable tint.

Moreover, the water-based composition of the invention can be used as a clear ink.

### 3: Method for producing ink

No particular limitation is imposed on the method for producing the ink of the invention. In one method, a dispersion in which particles of the ultraviolet curable oligomer in the first invention or the ultraviolet curable oligomer used in the second invention (the particles may be hereinafter referred to as "oligomer particles") are dispersed in a water-based medium (the dispersion may be hereinafter referred to as an "oligomer dispersion") and a dispersion in which the colorant such as a pigment is dispersed in a water-based medium (the dispersion may be hereinafter referred to as a "pigment dispersion") are prepared separately. Then the oligomer dispersion and the pigment dispersion are mixed with the polymerization initiator (water-soluble initiator), other additives, and the organic solvent. In another method, the colorant is added to the water-based composition of the invention. Inks with the same performance can be obtained irrespective of the production method used.

By adding and mixing the fat-soluble initiator and the fat-soluble sensitizer during preparation of the oligomer dispersion, these can be contained inside the oligomer particles. Alternatively, the fat-soluble initiator and the fat-soluble sensitizer may be dissolved in an organic solvent at a concentration of from about 0.1% by mass to 10% by mass inclusive, and this separately prepared solution may be mixed with other components.

A dispersion in the second invention can be prepared by adding the compound (I) to the dispersion of the ultraviolet curable oligomer in the process of producing the ink.

In this case, the amount of the compound (I) added may be set such that the above-described preferred content in the ink of the second invention is obtained. For example, the amount of the compound (I) used is from about 0.5% by mass to about 10% by mass inclusive with respect to the amount of the ultraviolet curable oligomer.

### 3-1: Preparation of oligomer dispersion

The oligomer dispersion can be prepared by mixing the ultraviolet curable oligomer in the first invention or the ultraviolet curable oligomer used in the second invention with the water-based medium (preferably water).

By adjusting the temperature and the stirring speed during mixing, the average particle diameter of the oligomer particles obtained can be adjusted.

The concentration of the oligomer particles in the oligomer dispersion prepared described above is preferably from about 10% by mass to about 30% by mass inclusive from the viewpoint of handleability.

By further adding and mixing the fat-soluble initiator and the fat-soluble sensitizer during the preparation of the oligomer dispersion, the dispersion obtained can contain oligomer particles with the fat-soluble initiator and the fat-soluble sensitizer contained thereinside. In this case, to prevent the formation of particles containing only the initiator or the sensitizer and containing no oligomer, it is preferable to mix the water-based medium such as water after the addition of the fat-soluble initiator and/or the fat-soluble sensitizer to the ultraviolet curable oligomer. To prepare oligomer particles containing the fat-soluble initiator and/or the fat-soluble sensitizer, the content of the fat-soluble initiator and/or the fat-soluble sensitizer in the oligomer particles is preferably from about 0.1% by mass to about 8% by mass inclusive with respect to the amount of the ultraviolet curable oligomer from the viewpoint of production stability.

### 3-2: Preparation of pigment dispersion

The pigment dispersion can be prepared by adding the colorant such as a pigment to the water-based medium such as water and mixing them.

The concentration of the colorant such as a pigment in the pigment dispersion is generally 5% by mass or more and preferably 10% by mass or more and is generally 40% by mass or less and preferably 35% by mass or less from the viewpoint of handleability and storage stability.

A commercial pigment dispersion may be used without any treatment.

### 4: Method for producing water-based compositions

No particular limitation is imposed on the method for producing the water-based composition of the first invention. In one method, as in the method for producing the ink of the invention described above, an oligomer dispersion is prepared, and the prepared oligomer dispersion is mixed with optional additives, the organic solvent, and at least one of the polymerization initiator (water-soluble initiator), the sensitizer, and the surfactant.

No particular limitation is imposed on the method for producing the water-based composition of the second invention. In one method, as in the method for producing the ink of the invention described above, an oligomer dispersion is prepared, and the compound (I) is added to the prepared oligomer dispersion. Then optional additives, the organic solvent, and at least one of the polymerization initiator (water-soluble initiator), the sensitizer, and the surfactant are mixed into the prepared mixture.

As described above, by adding and mixing the fat-soluble initiator and the fat-soluble sensitizer during the preparation of the oligomer dispersion, these can be contained inside the oligomer particles. Alternatively, the fat-soluble initiator and the fat-soluble sensitizer may be dissolved in an organic solvent at a concentration of from about 0.1% by mass to about 10% by mass inclusive, and this separately prepared solution may be mixed with other components.

A method for preparing the oligomer dispersion and a method for preparing a dispersion of oligomer particles containing the fat-soluble initiator and the fat-soluble sensitizer are the same as those in the method for producing the ink of the invention as described above.

### 5: Viscosity of ink

In the ink of the invention, the pigment dispersion stability is good, so that the ink can have a low viscosity. Therefore, the dischargeability of the ink is good even during high-speed printing. The viscosity of the ink of the invention at 25°C is preferably 25 mPa·sec or less, more preferably 20 mPa·sec or less, and still more preferably 10 mPa·sec or less. No particular limitation is imposed on the lower limit of the viscosity of the ink, but the viscosity of the ink is preferably 1 mPa·sec or more and more preferably 2 mPa·sec or more.

### 6: Viscosity of water-based composition

The viscosity of the water-based composition of the invention at 25°C is preferably 50 mPa·sec or less, more preferably 30 mPa·sec or less, and still more preferably 20 mPa·sec or less. No particular limitation is imposed on the lower limit of the viscosity of the water-based composition, but the viscosity is preferably 0.5 mPa·sec or more and more preferably 1 mPa·sec or more.

### 7: Ink container

The ink of the invention can be contained in an ink cartridge or an ink bottle. Therefore, it is unnecessary to make direct contact with the ink during conveyance, replacement, etc. of the ink, and stains on fingers and clothes can be prevented. Moreover, intrusion of foreign substances such as dust into the ink can be prevented.

No particular limitation is imposed on the shape, size, material, etc. of the ink container itself, so long as these are suitable, for example, for an inkjet printer to be used. Preferably, the material of the ink container is a light-shielding material that does not transmit light, or the container is covered with, for example, a light-shielding sheet.

### 8: Inkjet recording method

Preferably, an inkjet recording method using the ink of the invention includes: the step of discharging the ink of the invention from a discharge nozzle of an inkjet printer to cause the ink to adhere to a recording medium; a heating step of heating the recording medium with the ink adhering thereto; and an irradiation step of irradiating the ink adhering to the recording medium with active energy rays.

The step of causing the ink of the invention to adhere to the recording medium is not always limited to the method using the inkjet printer, and any method in which the ink in the form of a fog (mist or spray) is caused to adhere to the recording medium may be used.

### 8-1: Recording medium

No particular limitation is imposed on the recording medium to which the ink of the invention is applied. The ink of the invention is an ultraviolet curable water-based ink with high substrate versatility. Therefore, a high-image quality printed image can be formed with high adhesion on various substrates including plastic materials such as polyesters such as polyethylene terephthalate (PET), polyvinyl chloride (PVC), and polyolefins such as polyethylene (PE) and polypropylene (PP), paper, textiles (cloths and woven fabrics), leathers, glass, ceramics, woods, metals, and composite materials thereof.

### 8-2: Heating step

In the heating step, it is preferable to heat the recording medium with the ink of the invention adhering thereto to 40°C or higher. The heating temperature is more preferably 45°C or higher and still more preferably 50°C or higher. By performing the heating as described above, the volatile components such as water in the ink can be removed by drying, so that the curability tends to be further increased. No particular limitation is imposed on the upper limit of the heating temperature. However, the presence of the heating means generally causes the ink on the nozzle surface to dry, and this tends to cause discharge failure. Therefore, the heating temperature is preferably 120°C or lower and more preferably 100°C or lower. The heating temperature is the surface temperature of the recording surface of the recording medium.

No particular limitation is imposed on the heating means, and examples of the heating means include a ceramic heater, a halogen heater, and a quartz tube heater.

The heating may be performed at any time such as before, during, or after the step of causing the ink of the invention to adhere to the recording medium. It is more preferable that the heating is continuously performed before, during, and after the adhesion step.

### 8-3: Irradiation step

In the irradiation step, the irradiation with active energy rays initiates the polymerization reaction of the ultraviolet curable oligomer in the first invention or the ultraviolet curable oligomer used in the second invention. The irradiation with the active energy rays causes the polymerization initiator contained in the ink to decompose. An initiating species such as radicals, an acid, or a base is thereby generated, and the function of the initiating species facilitates the polymerization reaction of the ultraviolet curable oligomer. In this case, when the polymerization initiator and also the sensitizer are present in the ink, the sensitizer in the system absorbs the active energy rays and is excited. Then the sensitizer in the excited state comes into contact with the polymerization initiator to facilitate the decomposition of the polymerization initiator, and therefore the curing reaction can proceed with improved sensitivity.

Mercury lamps, metal halide lamps, gas and sold lasers, etc. are widely known as light sources (active energy ray sources). At present, from the viewpoint of environmental protection, there is a strong demand for eliminating the use of mercury, and replacement with GaN-based semiconductor UV light emitting devices is useful from the industrial and environmental viewpoints. UV light emitting diodes (UV-LEDs) and UV laser diodes (UV-LDs) are compact and low cost, have long service life and high efficiency, and are expected to be used as light sources for ultraviolet curable inkjet. Of these, UV-LEDs are preferred.

The light emission peak wavelength of the active energy ray source used for the irradiation is preferably in the range of 350 to 450 nm. The irradiation energy is 20 J/cm² or less and preferably, for example, 0.5 to 10 J/cm².

One light emission peak wavelength may be present in the above wavelength range, or a plurality of light emission peak wavelengths may be present in the wavelength range.

The irradiation step is not limited only to the above intentional step and may be performed as irradiation with sunlight such as outdoor exposure to sunlight.

When the reactivity (curability) of the ultraviolet curable oligomer in the first invention or the ultraviolet curable oligomer used in the second invention is high, only the heating step may be performed, and the irradiation step may not be used. Specifically, it is only necessary that the ink of the invention have ultraviolet curability, and the inkjet recording method is not limited to the printing method including the irradiation step.

### 9: Applications

The ink of the invention is water-based. Therefore, the ink of the invention has high environmental safety and well satisfies the characteristics required for a printing ink for an inkjet printer such as high image quality performance, high coating performance, high-speed printability, and substrate versatility in a well-balanced manner. Moreover, the ink of the first invention has high pigment dispersion stability, and the ink of the second invention has good storage stability at high temperature.

Therefore, with the ink of the invention, printed images with high image quality performance and high coating performance can be printed on various recording mediums at high productivity. The ink having such features can be used for various applications such as posters, road signs, signboards, billboards, outdoor and indoor display panels, building materials (exterior materials, interior materials, wall materials, floor materials, ceiling materials, and surface materials of windows), exterior materials for vehicles etc. (such as automobiles, railroad cars, and airplanes), surface materials of furniture and OA devices, etc., printed materials such as paper, etc.

### [EXAMPLES]

The present invention will next be described more specifically by way of Examples.

### [Preparation of ultraviolet curable oligomer]

0.4 Moles of a trimer of hexamethylene diisocyanate, 0.8 moles of dipentaerythritol pentaacrylate, and 0.4 moles of polyethylene glycol monoallyl ether (n = 30 to 40 in general formula (1) above) were allowed to react to produce a nonionic ultraviolet curable oligomer.

### [Preparation of water dispersion α of ultraviolet curable oligomer]

The above-obtained ultraviolet curable oligomer was maintained at 60°C and added dropwise to ion exchanged water heated in advance to 60°C under stirring to thereby obtain a water dispersion α of ultraviolet curable oligomer particles with an oligomer concentration of 20% by mass. The average particle diameter (D₅₀) of the ultraviolet curable oligomer particles in the water dispersion was measured using a particle size distribution meter MICROTRAC UPA (MODEL: 9340-UPA manufactured by NIKKISO Co., Ltd.) and found to be 36 nm.

### [Preparation of fat-soluble initiator solution]

1 Part by mass of GENOPOL TX-2 manufactured by RAHN and used as a fat-soluble initiator was added to 100 parts by mass of diethylene glycol monoisobutyl ether used as a water-soluble organic solvent and dissolved completely at 40°C under stirring to thereby obtain a fat-soluble initiator solution.

### [Preparation of water dispersion β of ultraviolet curable oligomer containing fat-soluble initiator]

0.2 Parts by mass of GENOPOL TX-2 manufactured by RAHN and used as a fat-soluble initiator was added to 20 parts by mass of the above-obtained ultraviolet curable oligomer. The mixture was maintained at 60°C, and ion exchanged water heated in advance to 60°C was added dropwise to the mixture under stirring until the oligomer concentration reached 20% by mass to thereby obtain a water dispersion β of the ultraviolet curable oligomer containing the fat-soluble initiator. The average particle diameter (D₅₀) of the ultraviolet curable oligomer particles in the water dispersion was measured using a particle size distribution meter MICROTRAC UPA (MODEL: 9340-UPA manufactured by NIKKISO Co., Ltd.) and found to be 29 nm.

### [Production of water dispersion γ of ultraviolet curable oligomer containing fat-soluble initiators]

0.2 Parts by mass of GENOPOL TX-2 manufactured by RAHN and used as a fat-soluble initiator and 0.2 parts by mass of Irgacure 369 manufactured by Ciba Specialty Chemicals and used as a fat-soluble initiator were added to 20 parts by mass of the above-obtained ultraviolet curable oligomer. The mixture was maintained at 60°C, and ion exchanged water heated in advance to 60°C was added dropwise to the mixture under stirring until the oligomer concentration reached 20% by mass to thereby obtain a water dispersion γ of the ultraviolet curable oligomer containing the fat-soluble initiators. The average particle diameter (D₅₀) of the ultraviolet curable oligomer particles in the water dispersion was measured using a particle size distribution meter MICROTRAC UPA (MODEL: 9340-UPA manufactured by NIKKISO Co., Ltd.) and found to be 33 nm.

### [Examples and Comparative Examples of first invention]

### [Example I-1]

Ion exchanged water, the water dispersion α of the ultraviolet curable oligomer, 1,2-butanediol used as a moisturizing solvent, diethylene glycol monoisobutyl ether used as a water-soluble organic solvent, a water-soluble initiator B, NOIGEN FN1287 manufactured by DAI-ICHI KOGYO SEIYAKU Co., Ltd. and used as a surfactant, and EMACOL SF CYAN AE2034F manufactured by SANYO COLOR WORKS, Ltd. and used as a pigment dispersion were added and mixed at a composition ratio shown in Table 1 to thereby obtain an ink composition solution 1. The viscosity of the ink composition solution I-1 at 25°C was 14.0 mPa·sec as measured using a digital viscometer DV-I+ manufactured by BROOKFIELD.

In Table 1, the ultraviolet curable oligomer in the first invention is denoted as "first inventive oligomer," and a different ultraviolet curable oligomer is denoted as "comparative oligomer" to distinguish it from the first inventive oligomer.

### [Example I-2]

An ink composition solution I-2 was obtained by adding and mixing components at a composition ratio shown in Table 1. Specifically, a water-soluble initiator A was used instead of the water-soluble initiator B in Example I-1.

### [Example I-3]

An ink composition solution I-3 was obtained by adding and mixing components at a composition ratio shown in Table 1 in the same manner as in Example I-2 except that the ultraviolet curable oligomer water dispersion β was used instead of the ultraviolet curable oligomer water dispersion α and that a water-soluble sensitizer was added. The viscosity of the ink composition solution I-3 was measured in the same manner as in Example I-1 and found to be 8.6 mPa·sec.

### [Example I-4]

An ink composition solution I-4 was obtained by adding and mixing components at a composition ratio shown in Table 1. Specifically, the fat-soluble initiator solution and a water-soluble sensitizer were used instead of the diethylene glycol monoisobutyl ether in Example I-2. The viscosity of the ink composition solution I-4 was measured in the same manner as in Example I-1 and found to be 8.0 mPa·sec.

### [Example I-5]

An ink composition solution I-5 was obtained by adding and mixing components at a composition ratio shown in Table 1. Specifically, Irgacure 500 manufactured by Ciba Specialty Chemicals and serving as a fat-soluble initiator was added to the ink composition solution in Example I-1. The viscosity of the ink composition solution I-5 was measured in the same manner as in Example I-1 and found to be 14.5 mPa·sec.

### [Comparative Example I-1]

An ink composition solution I-6 was obtained in the same manner as in Example I-1 except that an anionic acrylic emulsion (ACRIT 3MF-587 manufactured by Taisei Fine Chemical Co., Ltd.) serving as an ultraviolet curable oligomer and ethoxylated glycerin triacrylate (NK ester A-GLY-20E manufactured by Shin Nakamura Chemical Co., Ltd.) serving as a water-soluble monomer were used at a compositional ratio shown in Table 1.

### [Comparative Example I-2]

An ink composition solution I-7 was obtained in the same manner as in Example I-1 except that an anionic coreshell type ultraviolet curable urethane resin dispersion (ACRIT WBR-829DA manufactured by Taisei Fine Chemical Co., Ltd.) was used as an ultraviolet curable oligomer.

### [Comparative Example I-3]

An ink composition solution I-8 was obtained in the same manner as in Example I-2 except that a water-based urethane resin dispersion (TAKELAC WR-620 manufactured by Mitsui Chemicals, Inc.) was used as an ultraviolet curable oligomer.

### [Comparative Example I-4]

An ink composition solution I-9 was obtained in the same manner as in Example I-2 except that a polyurethane resin dispersion (ETERNACOLL UW-9102 manufactured by Ube Industries, Ltd.) was used as an ultraviolet curable oligomer.

### [Comparative Example I-5]

An ink composition solution I-10 was obtained in the same manner as in Example I-2 except that ethoxylated dipentaerythritol hexaacrylate (NK ester A-DPH-12E manufactured by Shin Nakamura Chemical Co., Ltd.) serving as a water-soluble monomer was used instead of the ultraviolet curable oligomer.

### [Comparative Example I-6]

An ink composition solution I-11 was obtained in the same manner as in Example I-4 except that a water-based emulsion (UAW-1000WO20 manufactured by KYOEISHA CHEMICAL Co., Ltd.) was used as an ultraviolet curable oligomer and that a compositional ratio shown in Table 1 was used.

### [Comparative Example I-7]

An ink composition solution I-12 was obtained in the same manner as in Example I-5 except that an anionic acrylic emulsion (ACRIT 3MF-587 manufactured by Taisei Fine Chemical Co., Ltd.) serving as an ultraviolet curable oligomer and ethoxylated glycerin triacrylate (NK ester A-GLY-20E manufactured by Shin Nakamura Chemical Co., Ltd.) serving as a water-soluble monomer were used and that a compositional ratio shown in Table 1 was used.

### [Comparative Example I-8]

An ink composition solution I-13 was obtained in the same manner as in Example I-5 except that ethoxylated glycerin triacrylate (NK ester A-GLY-20E manufactured by Shin Nakamura Chemical Co., Ltd.) serving as a water-soluble monomer was used instead of the ultraviolet curable oligomer and that a compositional ratio shown in Table 1 was used.

### [Example I-6]

An ink composition solution I-14 was obtained in the same manner as in Example I-3 except that EMACOL SF MAGENTA AE2033F manufactured by SANYO COLOR WORKS, Ltd. and serving as a pigment dispersion was used instead of the EMACOL SF CYAN AE2034F manufactured by SANYO COLOR WORKS, Ltd. and that a compositional ratio shown in Table 1 was used.

### [Example I-7]

An ink composition solution I-15 was obtained in the same manner as in Example I-3 except that EMACOL SF YELLOW AG2242F manufactured by SANYO COLOR WORKS, Ltd. and serving as a pigment dispersion was used instead of the EMACOL SF CYAN AE2034F manufactured by SANYO COLOR WORKS, Ltd. and that a compositional ratio shown in Table 1 was used. The viscosity of the ink composition solution I-15 was measured in the same manner as in Example I-1 and found to be 8.5 mPa·sec.

### [Example I-8]

An ink composition solution I-16 was obtained in the same manner as in Example I-3 except that EMACOL SF BLACK AE2078F manufactured by SANYO COLOR WORKS, Ltd. and serving as a pigment dispersion was used instead of the EMACOL SF CYAN AE2034F manufactured by SANYO COLOR WORKS, Ltd. and that a compositional ratio shown in Table 1 was used.

### [Example I-9]

An ink composition solution I-17 was obtained in the same manner as in Example I-8 except that the ultraviolet curable oligomer water dispersion γ was used instead of the ultraviolet curable oligomer water dispersion α and that a compositional ratio shown in Table 1 was used.

**[Table 1]**

| | Ink composition solution (% by mass) | | | | | | | | | | |
|---|---|---|---|---|---|---|---|---|---|---|---|
| | Pigment | Ultraviolet curable oligomer | | Water-soluble monomer | Moisturizing solvent | Water-soluble organic solvent | Fat-soluble initiator | Water-soluble initiator | Water-soluble sensitizer | Surfactant | Water |
| | | First inventive oligomer | Comparative oligomer | | | | | | | | |
| Example I-1 | 4.0 | 8.2 | 0 | 0 | 25 | 12 | 0 | 1.64 | 0 | 0.10 | Remainder |
| Example I-2 | 4.0 | 8.2 | 0 | 0 | 25 | 12 | 0 | 1.64 | 0 | 0.10 | Remainder |
| Example I-3 | 2.0 | 10.0 | 0 | 0 | 20 | 0 | 0.10 | 0.50 | 0.1 | 0.10 | Remainder |
| Example I-4 | 2.0 | 10.0 | 0 | 0 | 10 | 10 | 0.10 | 0.50 | 0.1 | 0.05 | Remainder |
| Example I-5 | 4.0 | 8.2 | 0 | 0 | 25 | 12 | 0.10 | 1.64 | 0 | 0.10 | Remainder |
| Comparative Example I-1 | 5.0 | 0 | 2.5 | 2.5 | 30 | 15 | 0 | 0.25 | 0 | 0.10 | Remainder |
| Comparative Example I-2 | 4.0 | 0 | 8.2 | 0 | 25 | 12 | 0 | 1.64 | 0 | 0.10 | Remainder |
| Comparative Example I-3 | 4.0 | 0 | 8.2 | 0 | 25 | 12 | 0 | 1.64 | 0 | 0.10 | Remainder |
| Comparative Example I-4 | 4.0 | 0 | 8.2 | 0 | 25 | 12 | 0 | 1.64 | 0 | 0.10 | Remainder |
| Comparative Example I-5 | 4.0 | 0 | 0 | 8.2 | 25 | 12 | 0 | 1.64 | 0 | 0.10 | Remainder |
| Comparative Example I-6 | 2.0 | 0 | 10.0 | 0 | 12 | 15 | 0.10 | 0.50 | 0.1 | 0.05 | Remainder |
| Comparative Example I-7 | 5.0 | 0 | 2.5 | 2.5 | 30 | 15 | 0.03 | 0.25 | 0 | 0.10 | Remainder |
| Comparative Example I-8 | 5.0 | 0 | 0 | 5 | 30 | 15 | 0.10 | 0.50 | 0 | 0.10 | Remainder |
| Example I-6 | 2.5 | 10.0 | 0 | 0 | 20 | 0 | 0.10 | 0.50 | 0.3 | 0.10 | Remainder |
| Example I-7 | 2.5 | 10.0 | 0 | 0 | 20 | 0 | 0.10 | 0.50 | 0.3 | 0.10 | Remainder |
| Example I-8 | 1.5 | 8.0 | 0 | 0 | 20 | 0 | 0.08 | 0.40 | 0.4 | 0.10 | Remainder |
| Example I-9 | 1.5 | 8.0 | 0 | 0 | 20 | 0 | 0.16 | 0.40 | 0.4 | 0.10 | Remainder |

### [Evaluation of ink composition solutions]

For each of the ink composition solutions obtained in Examples I-1 to I-9 and Comparative Examples I-1 to 8, the following evaluation was performed, and the results are shown in Table 2. For each of the ink composition solutions obtained in Example I-4 and Example I-7, adhesion evaluation described later was performed, and the results are shown in Table 3.

### <Evaluation of pigment dispersion stability in ink composition solutions>

Each ink composition was stored in a sealed container at room temperature for 7 days, and the appearance of the ink composition was visually observed and evaluated according to the following evaluation criteria.

O: No change was found by visual inspection.

x: Precipitation of the pigment was found, or the ink was gelated or obviously thickened.

### <Evaluation of cured film strength>

A method (1) or (2) below was used to form a cured film, and its strength was evaluated using a method (3).

### (1) LED curing

One of the prepared ink composition solutions was applied to a PVC film to a film thickness of 15 µm using a bar coater, and the film was heated at 80°C for 10 minutes and irradiated with UV rays with an irradiation energy of 7 J/cm² using an LED having a peak wavelength of 385 nm to thereby form a cured film.

### (2) Metal halide curing

One of the prepared ink composition solutions was applied to a PVC film to a film thickness of 15 µm using a bar coater, and the film was irradiated with 365 nm UV rays with an irradiation energy of 7 J/cm² using a metal halide lamp to thereby form a cured film.

### (3) Evaluation of strength of cured film

The cured film obtained above was used to evaluate alcohol resistance and waterfastness.

In the evaluation, the surface of the cured film was gently rubbed with absorbent cotton impregnated with anhydrous ethanol, and color staining of the absorbent cotton was visually checked and evaluated according to the following evaluation criteria. In addition, the surface of the cured film was strongly rubbed with absorbent cotton impregnated with water, and color staining of the absorbent cotton was visually checked and evaluated according to the following evaluation criteria.

O: No color staining occurred even when the surface was rubbed with ethanol and also with water.

Δ: No color staining occurred when the surface was rubbed with ethanol, but color staining occurred when the surface was rubbed with water.

x: Color staining occurred when the surface was rubbed with ethanol and also with water.

### <Evaluation of adhesion>

For each of the ink composition solutions obtained in Example I-4 and Example I-7, a cured film obtained in the cured film strength evaluation (1) and a cured film formed on a PET film using the same method were used to evaluate adhesion.

A box cutter was used to form 11 parallel cuts with a length of 20 mm at 1 mm intervals in each cured film and then form 11 parallel cuts with a length of 20 mm at 1 mm intervals so as to be perpendicular to the previously formed cuts to thereby form a 10 mm × 10 mm lattice pattern. An adhesive tape with a width of 18 mm and an adhesion strength of 3.93 N/10 mm was applied to the cured film and pressed with fingers so that the tape firmly adhered to the cured film. Then, with the substrate held at its portions on both sides of the tape so that the substrate was prevented from moving, the tape was rapidly peeled off, and the state of the cured film was visually checked. The state of the cured film was evaluated according to the following evaluation criteria.

O: No peeling was found in the cells of the lattice and the cuts.

×: Peeling was found in the cells of the lattice or along the cuts.

**[Table 2]**

| | Pigment dispersion stability | UV light source | Strength of cured film |
|---|---|---|---|
| Example I-1 | O | Metal halide | O |
| Example I-2 | O | Metal halide | O |
| Example I-3 | O | LED | ○ |
| Example I-4 | O | LED | O |
| Example I-5 | O | Metal halide | O |
| Comparative Example I-1 | O | Metal halide | × |
| Comparative Example I-2 | × | | |
| Comparative Example I-3 | × | | |
| Comparative Example I-4 | × | | |
| Comparative Example I-5 | O | Metal halide | × |
| Comparative Example I-6 | ○ | LED | Δ |
| Comparative Example I-7 | O | Metal halide | × |
| Comparative Example I-8 | O | Metal halide | × |
| Example I-6 | O | LED | ○ |
| Example I-7 | O | LED | O |
| Example I-8 | O | LED | O |
| Example I-9 | O | LED | O |

As can be seen from Table 2, the pigment dispersion stability of the ink of the first invention using the ultraviolet curable oligomer in the first invention is good. When the ink is cured by irradiation with UV rays, a high-strength printed image having good waterfastness and alcohol resistance can be formed.

However, in Comparative Examples I-5 and I-8 in which a water-soluble monomer was used and Comparative Examples I-1 and I-7 in which a water-soluble monomer and an anionic acrylic emulsion were used, the waterfastness and alcohol resistance were poor.

In Comparative Example I-6 in which a water-based emulsion was used, the waterfastness was poor.

In Comparative Examples I-2 to 4 in which a polyurethane resin was used, the pigment dispersion stability was poor, and the strength of the cured film was not evaluated.

**[Table 3]**

| | | Film (substrate) | |
|---|---|---|---|
| | | PVC | PET |
| Ink composition solution | Example I-4 | O (No film peeling) | ○ (No film peeling) |
| | Example I-7 | O (No film peeling) | O (No film peeling) |

As can be seen from Table 3, the ink of the first invention using the ultraviolet curable oligomer in the first invention has good adhesion to both the PVC and PET films, and its substrate versatility is high.

### [Examples and Comparative Examples of second invention]

### [Example II-1]

Ion exchanged water, the ultraviolet curable oligomer water dispersion α, 1,2-butanediol used as a moisturizing solvent, the fat-soluble initiator solution, a water-soluble initiator, a water-soluble sensitizer, NOIGEN FN1287 manufactured by DAI-ICHI KOGYO SEIYAKU Co., Ltd. and serving as a surfactant, N,N-diethylhydroxylamine (DEHA) used as an additive, and EMACOL SF CYAN AE2034F manufactured by SANYO COLOR WORKS, Ltd. and used as a pigment dispersion were added and mixed at a composition ratio shown in Table 4 to thereby obtain an ink composition solution II-1.

### [Example II-2]

An ink composition solution II-2 was obtained in the same manner as in Example II-1 except that the amount of the moisturizing solvent and the amount of the water-soluble organic solvent were changed.

### [Examples II-3 to 5]

Ink composition solutions II-3 to 5 were obtained in the same manner as in Example II-2 except that the amount of N,N-diethylhydroxylamine was changed.

### [Example II-6]

An ink composition solution II-10 was obtained in the same manner as in Example II-1 except that a water-based emulsion (UAW-1000WO20 manufactured by KYOEISHA CHEMICAL Co., Ltd.) was used as an ultraviolet curable oligomer instead of the ultraviolet curable oligomer water dispersion α.

### [Comparative Example II-1]

An ink composition solution II-6 was obtained in the same manner as in Example II-2 except that the additive was not added.

### [Comparative Example II-2]

An ink composition solution II-7 was obtained in the same manner as in Example II-1 except that the additive was not added.

### [Comparative Example II-3]

An ink composition solution II-8 was obtained in the same manner as in Example II-2 except that 3-pentanol was used as the additive.

### [Comparative Example II-4]

An ink composition solution II-9 was obtained in the same manner as in Example II-2 except that 1-dimethylamino-2-propanol (DMAP) was used as the additive.

### [Comparative Example II-5]

An ink composition solution II-11 was obtained in the same manner as in Example II-6 except that the additive was not added.

**[Table 4]**

| | Ink composition solution (% by mass) | | | | | | | | | | | |
|---|---|---|---|---|---|---|---|---|---|---|---|---|
| | Pigment | Ultraviolet curable oligomer | Water-based emulsion | Additive | | Moisturizing solvent | Water-soluble organic solvent | Fat-soluble initiator | Water-soluble initiator | Water-soluble sensitizer | Surfactant | Water |
| | | | | Type | Amount | | | | | | | |
| Example II-1 | 2 | 10 | - | DEHA | 0.5 | 12 | 15 | 0.1 | 0.5 | 0.1 | 0.05 | Remainder |
| Example II-2 | 2 | 10 | - | DEHA | 0.5 | 10 | 10 | 0.1 | 0.5 | 0.1 | 0.05 | Remainder |
| Example II-3 | 2 | 10 | - | DEHA | 0.2 | 10 | 10 | 0.1 | 0.5 | 0.1 | 0.05 | Remainder |
| Example II-4 | 2 | 10 | - | DEHA | 0.1 | 10 | 10 | 0.1 | 0.5 | 0.1 | 0.05 | Remainder |
| Example II-5 | 2 | 10 | - | DEHA | 0.05 | 10 | 10 | 0.1 | 0.5 | 0.1 | 0.05 | Remainder |
| Example II-6 | 2 | - | 10 | DEHA | 0.5 | 10 | 10 | 0.1 | 0.5 | 0.1 | 0.05 | Remainder |
| Comparative Example II-1 | 2 | 10 | - | - | 0 | 10 | 10 | 0.1 | 0.5 | 0.1 | 0.05 | Remainder |
| Comparative Example II-2 | 2 | 10 | - | - | 0 | 12 | 15 | 0.1 | 0.5 | 0.1 | 0.05 | Remainder |
| Comparative Example II-3 | 2 | 10 | - | 3-Pentanol | 0.5 | 10 | 10 | 0.1 | 0.5 | 0.1 | 0.05 | Remainder |
| Comparative Example II-4 | 2 | 10 | - | DMAP | 0.5 | 10 | 10 | 0.1 | 0.5 | 0.1 | 0.05 | Remainder |
| Comparative Example II-5 | 2 | - | 10 | - | 0 | 10 | 10 | 0.1 | 0.5 | 0.1 | 0.05 | Remainder |

### [Evaluation of ink composition solutions]

For each of the ink composition solutions obtained in Examples II-1 to 6 and Comparative Examples II-1 to 5, the following evaluation was performed, and the results are shown in Table 5.

### <Evaluation of high-temperature storage stability of ink composition solutions>

The ink composition solutions were placed in respective sample bottles and stored at 60°C for 14 days.

The state of each ink composition solution was visually checked before and after the storage, and its viscosity was measured before and after the storage using a digital viscometer DV-I+ manufactured by BROOKFIELD and evaluated according to the following criteria.
A: No change in viscosity of the ink was found.
B: The viscosity of the ink increased slightly.
C: The viscosity of the ink somewhat increased, but the increase causes no practical problem.
D: The ink was gelated.
E: Separation of the solid components of the ink was found.

The ink in Example II-1 was placed in a sample bottle and stored at 40°C for 14 days, and no change in the viscosity of the before and after the storage was found.

### <Evaluation of alcohol resistance of cured films>

A cured film was formed using the following method (1), and its alcohol resistance was evaluated using a method (2).

### (1) LED curing

One of the prepared ink composition solutions was applied to a PVC film to a film thickness of 15 µm using a bar coater, and the film was heated at 80°C for 10 minutes and irradiated with UV rays with an irradiation energy of 7 J/cm² using an LED having a peak wavelength of 385 nm to thereby form a cured film.

### (2) Evaluation of alcohol resistance of cured film

The above-obtained cured film was used to evaluate its alcohol resistance.

In the evaluation, the surface of the cured film was strongly rubbed with absorbent cotton impregnated with anhydrous ethanol, and color staining of the absorbent cotton was visually checked and evaluated according to the following evaluation criteria.

⊙: No color staining of the absorbent cotton was found.

O: Slight color staining of the absorbent cotton was found, but the color staining causes no practical problem.

×: Color staining of the absorbent cotton was found.

**[Table 5]**

| | High-temperature storage stability | Alcohol resistance |
|---|---|---|
| Example II-1 | B | ⊙ |
| Example II-2 | A | O |
| Example II-3 | B | ○ |
| Example II-4 | B | O |
| Example II-5 | C | O |
| Example II-6 | B | - |
| Comparative Example II-1 | D | × |
| Comparative Example II-2 | D | × |
| Comparative Example II-3 | E | - |
| Comparative Example II-4 | E | - |
| Comparative Example II-5 | C | - |

As can be seen from Table 5, the ink of the second invention containing the compound (I) has good high-temperature storage stability. By curing the ink by irradiation with UV rays, a printed image with good alcohol resistance can be formed.

However, in Comparative Examples II-1 and II-2 in which the compound (I) was not contained, the ink was disadvantageously gelated during storage at high temperature, and the alcohol resistance of the cured film was poor.

In Comparative Examples II-3 and II-4 in which an additive different from the compound (I) was added, the high-temperature storage stability was very poor, so that the evaluation of the cured film was not performed.

Although the present invention has been described in detail by way of the specific modes, it is apparent for those skilled in the art that various changes can be made without departing from the spirit and scope of the present invention.

The present application is based on Japanese Patent Application No. 2019-216741 filed on November 29, 2019, Japanese Patent Application No. 2019-216742 filed on November 29, 2019, Japanese Patent Application No. 2020-033702 filed on February 28, 2020, and Japanese Patent Application No. 2020-033703 filed on February 28, 2020, the entire contents of which are incorporated herein by reference.

## Claims

1. An ultraviolet-curable water-based inkjet-printing ink comprising an ultraviolet-curable oligomer and a colorant,
wherein the ultraviolet-curable oligomer comprises a structural unit derived from a polyisocyanate compound (A), a structural unit derived from a compound (B'), and a structural unit derived from a compound (C'),
the compound (B') comprises at least two polymerizable unsaturated bonds and is capable of bonding with the polyisocyanate compound (A), and
the compound (C') comprises a water-soluble compound is capable of bonding with the polyisocyanate compound (A).

2. The ultraviolet-curable water-based inkjet-printing ink according to claim 1, wherein the compound (C') comprises a compound having one terminal hydroxy group.

3. The ultraviolet-curable water-based inkjet-printing ink according to claim 1 or 2, wherein
the compound (B') comprises a hydroxyl group-containing polyfunctional (meth)acrylate (B), and
the compound (C') comprises a polyalkylene glycol (C).

4. The ultraviolet-curable water-based inkjet-printing ink according to claim 3, wherein the ultraviolet-curable oligomer has a structure that the structural unit derived from the polyisocyanate compound (A) is bonded to each of the hydroxyl group-containing polyfunctional (meth)acrylate (B) and the polyalkylene glycol (C) via a urethane bond.

5. The ultraviolet-curable water-based inkjet-printing ink according to any one of claims 1 to 4, wherein the polyisocyanate compound (A) has three or more isocyanate groups.

6. The ultraviolet-curable water-based inkjet-printing ink according to any one of claims 3 to 5, wherein the polyalkylene glycol (C) comprises a polyethylene glycol mono-substituted ether.

7. The ultraviolet-curable water-based inkjet-printing ink according to any one of claims 1 to 6, wherein the ultraviolet-curable oligomer is dispersed as particles in a water-based medium.

8. The ultraviolet-curable water-based inkjet-printing ink according to any one of claims 1 to 7, wherein an average particle size of the ultraviolet curable oligomer is 10 nm or more and 200 nm or less.

9. The ultraviolet-curable water-based inkjet-printing ink according to any one of claims 1 to 8, wherein viscosity at 25 °C is 1 mPa·sec or more and 25 mPa·sec or less.

10. The ultraviolet-curable water-based inkjet-printing ink according to any one of claims 1 to 9, wherein a content of the colorant is 0.1 wt% or more and 8 wt% or less, and a content of the ultraviolet-curable oligomer is 3 wt% or more and 20 wt% or less.

11. The ultraviolet-curable water-based inkjet-printing ink according to any one of claims 1 to 10, further comprising at least one selected from the group consisting of a polymerization initiator, a sensitizer, and a surfactant.

12. The ultraviolet-curable water-based inkjet-printing ink according to claim 11, further comprising the polymerization initiator and/or a sensitizer, wherein at least part of the polymerization initiator and/or the sensitizer is encompassed by the ultraviolet-curable oligomer.

13. A printed product comprising, on a recording medium, a cured compound formed from the ultraviolet-curable water-based inkjet-printing ink according to any one of claims 1 to 12.

14. An ultraviolet curable water-based composition for inkjet printing, comprising: an ultraviolet-curable oligomer; and at least one selected from the group consisting of a polymerization initiator, a sensitizer, and a surfactant,
wherein the ultraviolet curable oligomer includes a structural unit derived from a polyisocyanate compound (A), a structural unit derived from a compound (B'), and a structural unit derived from a compound (C'),
the compound (B') comprises at least two polymerizable unsaturated bonds and is capable of bonding with the polyisocyanate compound (A), and
the compound (C') comprises a water-soluble compound is capable of bonding with the polyisocyanate compound (A).

15. The ultraviolet curable water-based composition for inkjet printing according to claim 14, wherein the compound (C') comprises a compound having one terminal hydroxyl group.

16. The ultraviolet curable water-based composition for inkjet printing according to claim 14 or 15, wherein the compound (B') comprises a hydroxyl group-containing polyfunctional (meth)acrylate (B), and the compound (C') comprises a polyalkylene glycol (C).

17. The ultraviolet curable water-based composition for inkjet printing according to any one of claims 14 to 16, further comprising: at least one polymerization initiator; and a sensitizer and/or a surfactant.

18. The ultraviolet curable water-based composition for inkjet printing according to any one of claims 14 to 17, further comprising a polymerization initiator and/or a sensitizer, wherein at least part of the polymerization initiator and/or the sensitizer is encompassed by the ultraviolet-curable oligomer.

19. An ultraviolet-curable water-based inkjet-printing ink, comprising an ultraviolet-curable oligomer, a colorant, and a compound represented by Formula (I): 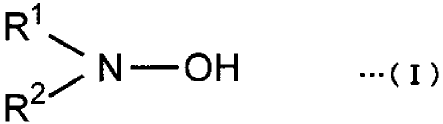 wherein in Formula (I), R¹ and R² each independently represents an alkyl group having 1 or more and 10 or less of carbon atoms.

20. The ultraviolet-curable water-based inkjet-printing ink according to claim 19, wherein the ultraviolet-curable oligomer is nonionic.

21. The ultraviolet-curable water-based inkjet-printing ink according to claim 19 or 20, wherein the compound represented by Formula (I) is N,N-diethylhydroxylamine.

22. The ultraviolet-curable water-based inkjet-printing ink according to any one of claims 19 to 21, wherein the ultraviolet-curable oligomer comprises a structural unit derived from a polyisocyanate compound (A), a structural unit derived from a compound (B'), and a structural unit derived from a compound (C'):
the compound (B') comprises at least two polymerizable unsaturated bonds and is capable of bonding with the polyisocyanate compound (A), and
the compound (C') comprises a water-soluble compound is capable of bonding with the polyisocyanate compound (A).

23. The ultraviolet-curable water-based inkjet-printing ink according to claim 22, wherein the compound (C') comprises a compound having one terminal hydroxyl group.

24. The ultraviolet-curable water-based inkjet-printing ink according to claim 22 or 23, wherein
the compound (B') comprises a hydroxyl group-containing polyfunctional (meth)acrylate (B) and
the compound (C') comprises a polyalkylene glycol (C).

25. The ultraviolet-curable water-based inkjet-printing ink according to claim 24, wherein the ultraviolet-curable oligomer has a structure that the structural unit derived from the polyisocyanate compound (A) is bonded to each of the hydroxyl group-containing polyfunctional (meth)acrylate (B) and the polyalkylene glycol (C) via a urethane bond.

26. The ultraviolet-curable water-based inkjet-printing ink according to any one of claims 22 to 25, wherein the polyisocyanate compound (A) has three or more isocyanate groups.

27. The ultraviolet-curable water-based inkjet-printing ink according to any one of claims 24 to 26, wherein the polyalkylene glycol (C) comprises a polyethylene glycol mono-substituted ether.

28. The ultraviolet-curable water-based inkjet-printing ink according to any one of claims 19 to 27, wherein an average particle size of the ultraviolet curable oligomer is 10 nm or more and 200 nm or less.

29. The ultraviolet-curable water-based inkjet-printing ink according to any one of claims 19 to 28, wherein viscosity at 25 °C is 1 mPa·sec or more and 25 mPa·sec or less.

30. The ultraviolet-curable water-based inkjet-printing ink according to any one of claims 19 to 29, wherein a content of the colorant is 0.1 wt% or more and 8 wt% or less,
a content of the ultraviolet-curable oligomer is 3 wt% or more and 20 wt% or less, and
a content of the compound represented by Formula (I) is 0.01 wt% or more and 5 wt% or less.

31. The ultraviolet-curable water-based inkjet-printing ink according to any one of claims 19 to 30, further comprising at least one selected from the group consisting of a polymerization initiator, a sensitizer, and a surfactant.

32. The ultraviolet-curable water-based inkjet-printing ink according to claim 31, further comprising a polymerization initiator and/or a sensitizer, wherein at least a part of the polymerization initiator and/or the sensitizer is encompassed by the ultraviolet curable oligomer.

33. A dispersion comprising an ultraviolet curable oligomer, wherein the ultraviolet-curable oligomer is nonionic and comprises 0.01 wt% or more and 5 wt% or less of a compound represented by the following Formula (I): 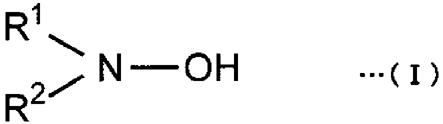 wherein in Formula (I), R¹ and R² each independently represents an alkyl group having 1 or more and 10 or less carbon atoms.

34. The dispersion according to claim 33, wherein the ultraviolet-curable oligomer comprises a structural unit derived from a polyisocyanate compound (A), a structural unit derived from a compound (B'), and a structural unit derived from a compound (C'):
the compound (B') comprises at least two polymerizable unsaturated bonds and is capable of bonding with the polyisocyanate compound (A), and
the compound (C') comprises a water-soluble compound is capable of bonding with the polyisocyanate compound (A).

35. The dispersion according to claim 34, wherein the compound (C') comprises a compound having one terminal hydroxyl group.

36. A printed product comprising, on a recording medium, and a cured compound formed from the ultraviolet-curable water-based inkjet-printing ink according to any one of claims 19 to 32.

37. An ultraviolet curable water-based composition for inkjet printing, comprising: an ultraviolet curable oligomer; at least one of a polymerization initiator, a sensitizer, and a surfactant; and a compound represented by Formula (I): 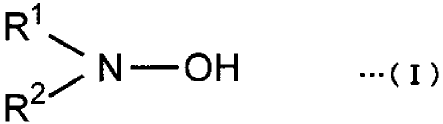 wherein in Formula (I), R¹ and R² each independently represents an alkyl group having 1 or more and 10 or less carbon atoms.

38. The ultraviolet curable water-based composition for inkjet printing according to claim 37, wherein the ultraviolet-curable oligomer is nonionic.

39. The ultraviolet curable water-based composition for inkjet printing according to claim 37 or 38, wherein the compound represented by Formula (I) is N,N-diethylhydroxylamine.

40. The ultraviolet curable water-based composition for inkjet printing according to any one of claims 37 to 39, wherein
the ultraviolet-curable oligomer comprises a structural unit derived from a polyisocyanate compound (A), a structural unit derived from a compound (B'), and a structural unit derived from a compound (C'),
the compound (B') comprises at least two polymerizable unsaturated bonds and is capable of bonding with the polyisocyanate compound (A), and
the compound (C') comprises a water-soluble compound is capable of bonding with the polyisocyanate compound (A).

41. The ultraviolet curable water-based composition for inkjet printing according to claim 40, wherein the compound (C') comprises a compound having one terminal hydroxyl group.

42. The ultraviolet curable water-based composition for inkjet printing according to claim 40 or 41, wherein the compound (B') comprises a hydroxyl group-containing polyfunctional (meth)acrylate (B), and the compound (C') comprises a polyalkylene glycol (C).

43. The ultraviolet curable water-based composition for inkjet printing according to any one of claims 37 to 42, further comprising: at least one or more polymerization initiators; and a sensitizer and/or a surfactant.

44. The ultraviolet curable water-based composition for inkjet printing according to any one of claims 37 to 43, further comprising a polymerization initiator and/or a sensitizer, wherein at least a part of the polymerization initiator and/or the sensitizer is encompassed by the ultraviolet-curable oligomer.
